(19) Europäisches Patentamt
European Patent Office
Office européen des brevets

(11) Publication number: **0 466 098 A2**

# (12) EUROPEAN PATENT APPLICATION

(21) Application number: **91111408.0**

(51) Int. Cl.[5]: **G06F 15/20**

(22) Date of filing: **09.07.91**

(30) Priority: **11.07.90 JP 181393/90**

(43) Date of publication of application: **15.01.92 Bulletin 92/03**

(84) Designated Contracting States: **DE FR GB NL**

(71) Applicant: **HITACHI, LTD.**
**6, Kanda Surugadai 4-chome**
**Chiyoda-ku, Tokyo 101(JP)**

(72) Inventor: **Miyakawa, Seii**
**79, Maiokacho**
**Totsuka-ku, Yokohama-shi(JP)**
Inventor: **Arimoto, Syoji**
**19-2-A-904, Ueki**
**Kamakura-shi(JP)**
Inventor: **Ikeda, Manabu**
**212-22, Akibacho, Totsuka-ku**
**Yokohama-shi(JP)**
Inventor: **Ohashi, Toshijiro**
**4-4-504, Chigasaki-2-chome**
**Chigasaki-shi(JP)**
Inventor: **Iwata, Minoru**
**233-61, Miyanokicho**
**Chiba-shi(JP)**

(74) Representative: **Altenburg, Udo, Dipl.-Phys. et al**
**Patent- und Rechtsanwälte**
**Bardehle-Pagenberg-Dost-Altenburg-Frohwitter & Partner Postfach 86 06 20**
**W-8000 München 86(DE)**

## (54) Method and apparatus for evaluating the suitability of an article for a given operation.

(57) An operability or processability evaluating method and apparatus for facilitating design evaluation even by an unskilled user by determining quantitatively and definitely evaluation indexes for article or a part or parts subjected to evaluation and relation between the evaluation index and cost/time involved in operation performed on the article or a part/part. States of the article or a part/part of concern corresponding to the kinds of operations such as processing, assembling or inspection are categorized into a variety of basic elements ($_mX$) of which the element corresponding to a relatively simple state is defined as a standard element ($_mX_o$). An index formula is prepared for determining an index ($_m\epsilon_x$) indicating degree of difficulty of operation by comparing cost ($_mC_x$) and/or time ($_mT_x$) involved in operation performed on the basic element ($_mX$) or an index ($_mI_x$) thereof with those for the standard element. A program indicating relation between the basic elements ($_mX$) and the indexes ($_m\epsilon_x$) is stored in a memory (2). Standard article having predetermined states ($m_o$, $a_o$, $_m\ell_b$) serving as the standard for the article to be evaluated is previously defined. When the cost/time involved in the operation determined in accordance with the index formula in response to the input of the basic elements ($_mX$) or indexes for the article/part subjected to evaluation by the user increases beyond the cost/time for the standard, an operability evaluation score ($_mE_i$) indicating difficulty of operation or processing is calculated in accordance with an arithmetic program on the basis of a predetermined evaluation standard value (100) to be subsequently displayed in an evaluation form desired by user.

EP 0 466 098 A2

FIG 1

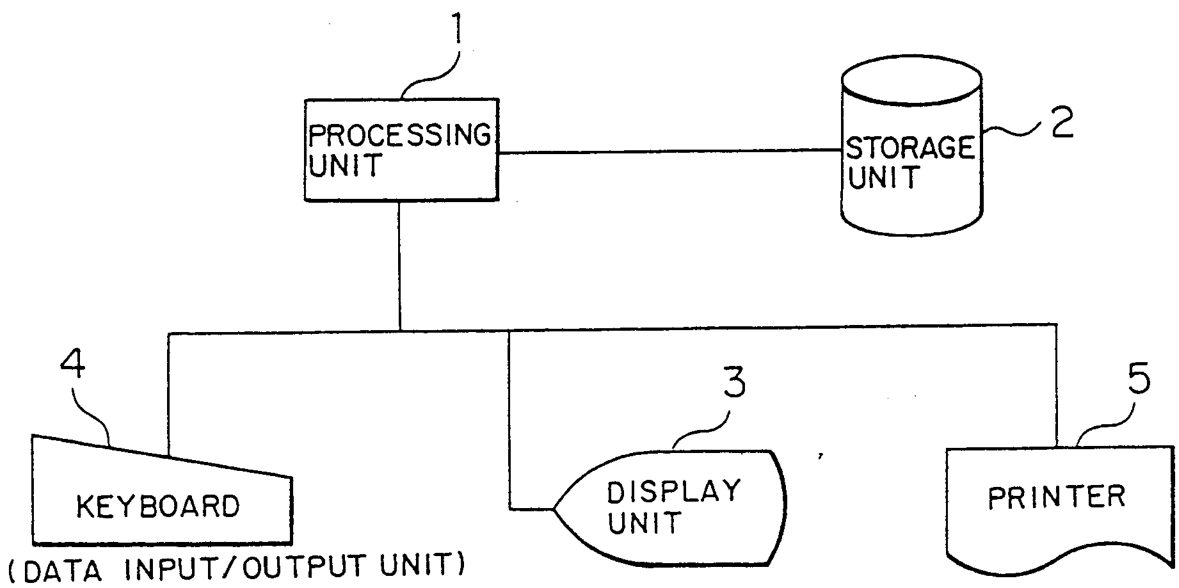
1
PROCESSING UNIT
STORAGE UNIT
2
4
3
5
KEYBOARD
(DATA INPUT/OUTPUT UNIT)
DISPLAY UNIT
PRINTER

BACKGROUND OF THE INVENTION

The present invention relates generally to a method and an apparatus for evaluating operability such as processability, assemblability or the like of a product, a constituent part or an article in more general sense. More particularly, the invention is concerned with a method of evaluating quantitatively whether an article of concern has a structure which is easy or difficult to process, assemble manufacture, operate, use or handle with a view to improving productivity and reducing manufacturing cost of the article. The invention is also concerned with an apparatus for carrying out the evaluation method in an automated manner.

For evaluating whether an article of concern has easy or difficult operability such as processability assemblability, machinability or the like, there are known generally three typical evaluation methods, as mentioned below.

According to a first method referred to as the design review method, the operability of an article is determined by having a corresponding design drawing be reviewed by those skilled in the design, production, inspection and other engineering/technical fields on the basis of their empirical knowledges or experiences, wherein a portion or an area to be improved, if any, are pointed out.

According to a second prior art method known heretofore, an engineer familiar with production and manufacturing techniques makes a process planning for an article or product on the basis of a design drawing, whereon estimated operation cost and time consumption expected to be involved in the process operations of the article are arithmetically determined. By taking into account the calculated values, the designer or engineer in charge of manufacturing the article makes decision as to favorableness or satisfactoriness of the structure of the product. In this conjunction, the estimated operation cost may be determined in accordance with a work factor (WF) scheme known heretofore (also referred to as method-time measurement or simply as MTM method) and given in terms of a product of the estimated time and the shop rate.

As a third evaluation method known heretofore, there can be mentioned an assemblability evaluation method disclosed in "KIKAI SEKKEI (MACHINE DESIGN)", Vol. 33, No. 7 published by Nikkan Kogyou Shinbunsha Company of Japan (June, 1989), pp. 39-47. This evaluation method is concerned with a processability evaluation for quantitatively evaluating processability (i.e. ease of processing) of an article or product and an assemblability evaluation for quantitutively evaluating assemblability (i.e. ease of assembling) to thereby determine the ease of manufacturing or manufacturability on the basis of the results of both evaluations mentioned above. More specifically, significance-dependent item scores are first determined intuitively or empirically by an engineer skilled in the relevant art for the items to be evaluated (e.g. items to be checked such as kinds of process, operation, shape) which are required for evaluating the assemblability (ease of assembling) and, processability or workability (ease of processing or working) of an article to be manufactured, whereon evaluation score or elimination score is determined, for example, from the economical standpoint to serve as a standard or reference element for the evaluation purpose. Subsequently, the evaluation score up to, for example, a perfect score of 100 points or corresponding index is presented to the designer and/or a process engineer for allowing him or her to make decision as to the favorableness or satisfactoriness of the structures of the article under evaluation on the basis of the evaluation score thus determined. The evaluation methods of this type are also disclosed in, for example, JP-A-61-59900 and JP-A-63-177598.

The first mentioned prior art evaluation method (i.e. design review method) is of qualitative nature rather than quantitative and is disadvantageous in that not a little difficulty is encountered in expressing objectively and quantitatively to what extent the structure of an article under evaluation is favorable or unfavorable (satisfactory or dissatisfactory) or how effective an improvement attempted will be. Besides, this method suffers from a problem that it can be carried out only by those having sufficient skillfulness in the design and process engineerings.

According to the second mentioned prior art evaluation method (which is based on the estimated cost and time expected to be involved in the process or working), the cost and time consumption can certainly be estimated for a product or article as a whole or for every individual part or for some of parts constituting the article. However, it is difficult to decide on the basis of only the estimated processing and assembling costs whether the designed structure can be qualified or whether any further improvement is necessary. Moreover, the evaluation requires not a few experiences and knowledges as well as lots of time for the calculations involved therein, which makes the evaluation very expensive. Besides, unless the design of an article of concern has been completed or substantially completed, evaluation itself is impossible or difficult at the least. Consequently, improvement or alteration of the design found necessary can not be done until the design has been completed, which in turn means that intolerably lot of time and expenditure will be taken for the alteration of the design once completed. Under the circumstances, many articles designed

rather unsatisfactorily or unfavorably are likely to be transferred to a production line without undergoing further improvement, thus giving rise to a problem that obstacle is often encountered in the attempt for enhancing the productivity and cost reduction.

The third prior art evaluation method mentioned above (which is based on the evaluation score and index) certainly permits a time-sparing evaluation without need for rich experience. However, there arise such problems that relation between the evaluation index (such as evaluation score and index) and the cost and time involved in the processing is indefinite and that the result of evaluation is difficult to verify because of lacking of definite and concrete presentation of the standards for determining the relation between the evaluation index and the expenditure (cost and time consumption). The standards can be presented only roughly. Additionally, great difficulty will be encountered in making decision on the basis of two or more evaluation indexes such as processability and assemblability evaluation indexes and the like as to whether the design as completed is optimal for the manufacturing of the article or product of concern. Let's assume, by way of example, that there are presented to a designer a structuring model A improved in respect to the assemblability at the expense of processability because of primary reliance on the assemblability evaluation method and a structuring model B improved in the processability at the expense of the assemblability by relying primarily on the processability evaluation method, as is illustrated in Fig. 17 of the accompanying drawings. In such situation, the designer will not be able to make decision straightforwardly as to which of the model A or B should be adopted.

In brief, the prior art evaluation methods mentioned above suffer the shortcomings mentioned below.

(1) Evaluation is not quantitative but qualitative by nature.

(2) Evaluation can be made only by those having an abundance of experience.

(3) With the evaluation based only on such factors as involved the cost and time, it is difficult to decide whether the quality of design is satisfactory or not.

(4) Enormous labor is required for the evaluation.

(5) Evaluation can be made only after the design has been completed or at the time point close to the completion of the design, which makes it difficult to improve the design in the course of evaluation.

(6) Relation between the evaluation index and the operation cost and time is indefinite.

(7) Method of calculating the evaluation index has not definitely been established yet.

(8) It is impossible to judge synthetically the quality of the design on the basis of two or more evaluation indexes inclusive of the processability index, assemblability index and other.

## SUMMARY OF THE INVENTION

It is therefore an object of the present invention to provide an operability evaluation method and an apparatus for carrying out the method which allow the relations between the evaluation index(es) and the expenditure (i.e. cost and/or time taken for operation) to be arithmetically determined quantitatively and definitely for an article or product to be designed.

Another object of the present invention is to provide operability evaluation method and apparatus which are capable of conducting design evaluation without difficulty at an earlier stage in the course of development and designing of an article or an apparatus or equipment.

At this juncture, it should be mentioned that the term "operability" is used with intention to mean "ease or facility of production, operation, processing, machining, assembling, use, working, handling, delivering or the like doings of articles or products". Thus, term "operability" can conceptuaqlly encompass the terms "processability" and "assemblability" used in the description of the preferred or exemplary embodiment of the invention. Further with the terms "article" or "product" used herein, it is contemplated to cover various manufactured goods, constituent parts, apparatuses, devices, machines and the like used in various industrial fields.

In view of the above and other objects which will be apparent as description proceeds, there is provided according to a first aspect of the present invention an operability evaluating method which comprises steps of:

classifying or categorizing states corresponding to kinds of operations to be performed on an article or a part subjected to evaluation into basic elements;

defining a predetermined state as a standard element to serve as the standard for the basic elements mentioned above;

defining a basic index indicating a degree of difficulty (ease) of operation to be performed for each of the basic elements in accordance with a relation formula or a function which is prepared to compare operation cost and/or time involved in the operation to be performed for of each basic element with those or that for the standard element while taking into account operation conditions (such as the number of the

articles, types of operating means, ability of workers, etc.) such that a value resulting from the comparison is scarcely susceptible to change regardless of changes in the operation conditions; and

defining an article or a part having a predetermined state to serve as the standard for said article or part under evaluation as an article standard or a part standard;

wherein when the cost and/or time involved in the operation determined in accordance with said relation formula or function on the basis of the basic elements indicating the states of said article or parts subjected to the evaluation or said basic index increases beyond the cost and/or time which will be involved in operation performed on said article standard or said part standard under the same operation conditions as those of said article or parts under evaluation, an article or part operability index indicating operability (ease of operation) of said article or said part under evaluation is arithmetically determined in accordance with a function formula or a function which is so prepared as to decrease or increase a predetermined value by the value resulting from the abovementioned comparison and to be scarcely susceptible to change regardless of change in the operation conditions.

According to an embodiment of the invention for evaluating the operability of an article which represents an assembly of individual constituent parts, it is preferred to calculate the abovementioned part operability index for each of plural parts constituting the article subjected to evaluation, wherein when a sum value of the operation costs and/or times involved in the operations performed on the individual parts determined from a plurality of calculated part operability indexes increases beyond a sum value of the operation costs and/or times involved in the operations performed on the part standards under the same operation conditions as those of the parts under evaluation, then the article operability index indicating the operability of the article under evaluation as a whole is arithmetically determined in accordance with a relation formula or a function which is so prepared as to decrease or increase a predetermined value by a value resulting from the comparison mentioned above and to be scarcely susceptible to change regardless of change in the operation conditions.

In a preferred mode for carrying out the invention, factors exerting influence to the cost and time involved in the operation(s) performed on the article or part to be evaluated are extracted as supplementary elements for the states of the article or the part, respectively, in addition to the basic elements mentioned above, whereon a predetermined state serving as the standard for each of the supplementary elements is defined as the supplementary standard.

It is preferred to identify discriminatively one or plural supplementary states for each of the supplementary elements, whereon a supplementary index indicating a degree of influence exerted to the operability is determined for each of the supplementary states in accordance with a relation formula or function prepared to compare the cost and/or time involved in operation performed for each of the supplementary states with those or that of the supplementary standard under the same operation condition such that a value resulting from the comparison is less susceptible to change regardless of change in the operation conditions. The supplementary index can be made use of for correcting the basic index for thereby ensuring a more accurate evaluation.

In another preferred mode for carrying out the invention, the part operability index may be arithmetically determined for each of plural parts constituting an article to be evaluated in respect to the operability thereof, whereon the article operability index may be determined in accordance with a relation formula or a function prepared to determine a mean value of the plurality of the part operability indexes mentioned above. In this case, evaluation can be realized more rapidly and easily.

Further, when the cost and/or time involved in the operation performed on an article or a part to be evaluated is determined on the basis of a real value of the cost and/or time involved in operation actually performed on an existing article or part having similarity to that to be evaluated in acordance with a formula or function prepared to compare the operability index of the article or part under evaluation with that of the existing one having similarity to the former, the practical applicability of the result of the evaluation can further be improved.

An operability evaluating apparatus for carrying out the evaluation methods described above comprises an input unit, a storage unit, a processing unit and a display unit.

The input unit serves for the function to input data of the article and/or part to be evaluated.

The storage unit is adapted to store the data of the basic elements representing the classified states of the article or part to be evaluated, the basic indexes and supplementary indexes thereof and the relation formulae or function programs as well as other data of the article or the part and the results of calculations and evaluation.

The processing unit serves to arithmetically determine or calculate the operability of an article and/or part under evaluation on the basis of the relevant data read out from the storage unit.

The display unit serves for displaying a degree of difficulty or ease of the operation (i.e. degree of

operability) calculated by the arithmetic unit.

Further, according to a second aspect of the present invention, it is proposed that after evaluations of the operabilities having been made on the article or part subjected to the evaluation for every kind of operations to be performed on the article or part in the manner as described above, the results of the evaluations are then processed in the following manner to thereby make a synthetic evaluation of overall operability of the article or part for the plural kinds of operations to be performed thereon. Namely, a function formula is established such that the evaluation score is decreased or increased when the sum of the operation costs and times involved in performing all the kinds of operations to be performed on the article or part subjected to evaluation increases relative to a sum of the operation costs and times involved in all the kinds of operations to be performed on the standard article or part, whereon the evaluation score resulting from the above processing is defined as a synthetic operability evaluation score indicating synthetically the degree of the operabily of the article or part under evaluation for the plurality of operations to be performed thereon. Similarly, a plurality of kinds of operations (e.g. processing operation and assembling operation) may be considered as an operation of conceptually more general kind (e.g. manufacturing operation in the broader sense), whereon a synthetic evaluation score indicating synthetically operability of the more general kind of operation (i.e. manufacturing operation encompassing both the processing operation and the assembling operation in the case assumed above) may be obtained by defining the basic elements, standard element, supplementary element, article standard, part standard and/or the like as in the aforementioned case where the operability evaluation score is determined for each kind of operation to be performed on the article or part under evaluation.

A synthetic operability evaluating apparatus for carrying out the method described just above may be composed of an input unit, a storage unit, a processing (or arithmetic) unit and a display unit.

The input unit serves for the function to input data of the article and/or part to be evaluated.

The storage unit is adapted to store the data of the basic elements representing the classified states of the article or parts to be evaluated, the basic indexes and supplementary indexes thereof and the relation formulae, function programs as well as other data of the article or the part and the results of calculations and evaluation.

The processing unit serves to arithmetically determine or calculate the operability of an article and/or part under evaluation on the basis of the relevant data read out from the storage unit.

The display unit serves for displaying degrees of difficulty or ease of the operation calculated by the arithmetic unit.

By virtue of the evaluation method according to the first aspect of the present invention, operability for one or plural kinds of operations or processes to be performed on an article or a part can be expressed in terms of the operability index derived primarily from the basic indexes in consideration of the cost(s) and/or time(s) involved in performing the operation(s) or process(es).

The basic elements can easily be extracted or derived from the contents or data written on a design drawing, an article or a part of concern without need for any especial skillfulness, examination or inspection and experience.

The basic indexes can be summed up or averaged by a simple calculation such as a low-point method of scoring, a high-point method of scoring or the like to thereby determine an index indicating the operability of a part of concern.

By correcting the basic index with the supplementary index, there can further be enhanced the accuracy of evaluation.

The evaluation method can equally be applied to an article which is an assembly of parts for evaluating the operability of the article as a whole.

By virtue of the evaluation methods and apparatus according to the second aspect of the present invention as described above, operability for one or plural kinds of operations or processes of an article or a part can be expressed in terms of the individual evaluation scores or a synthetic evaluation score derived primarily from the indexes of the basic elements on the basis of the cost(s) and/or time(s) involved in performing the operations or processes.

The basic elements mentioned above can easily be extracted or derived from the contents or data written on a design drawing, an article or a part of concern without need for any especial skillfulness, examination or inspection and experience.

The indexes of the basic elements can be summed up or averaged by a simple calculation (a low-point method of scoring, a high-point method of scoring or the like) to thereby describe or express the operabilities of the individual parts or that of an assembly of the parts in terms of respective evaluation scores or a synthesized evaluation score.

By correcting the index of the basic element by that of the supplementary element, there can further be

enhanced the accuracy of evaluation.

According to the evaluation method in which when the sum of the operation costs and times involved in a plurality of different operations to be performed on an article or a part increases relative to the sum of the corresponding values for the article standard or the part standard, the evaluation score is decreased or increased in accordance with the pre-established relation or function formula to thereby derive the index indicating synthetically the quality or degree of operabily for the plural kinds of processes to be performed on the article or the part as a whole (this index will be referred to as the synthetic operability evaluation score for plural kinds of operations or simply as the synthetic evaluation score), it is possible to arithmetically determine the synthetic evaluation score simply by correspondingly processing arithmetically the results of evaluations made concerning the operabilities for the plural kinds of operations, respectively, without need for additional definitions of any other elements and standards as well as analyses based thereon.

With the structure of the synthetic evaluation apparatus according to the present invention for carrying out the method mentioned just above, data of articles and parts (such as those of basic elements, supplementary elements and others) can be inputted through the input unit and stored in the storage unit together with the relation or function formulae and others. On the other hand, the processing unit only perform arithmetic operations for determining the synthetic operability of an article as a whole on the basis of the operabilities of the parts constituting the article, the results of the operations performed by the processing unit being displayed on the display unit.

## BRIEF DESCRIPTION OF THE DRAWINGS

Fig. 1 is a schematic block diagram for illustrating a general structure of a computer system which is arranged to carry out an evaluation method according to the invention;

Fig. 2 shows a chart for illustrating, by way of example, basic elements in a processing or machining operation together with the contents thereof;

Fig. 3 shows a chart for illustrating, by way of example, supplementary elements in the processing operation together with the contents thereof;

Fig. 4 is a flow chart for illustrating a processability evaluation method according to an embodiment of the invention;

Figs. 5A and 5B are top plan views showing, by way of example, keyboards which can be used in carrying out the invention;

Fig. 6 is a chart for illustrating, by way of example, the results obtained from a processability evaluation carried out according to the teaching of the invention;

Fig. 7 is a chart for illustrating results of the verification of accuracy in the calculation of processing time in accordance with a processability evaluation method according to the invention;

Fig. 8 is a chart for illustrating an example of design improvement achieved according to a processability evaluation method according to the invention;

Fig. 9 is a chart for illustrating, by way of example, basic elements in an assembling operation together with the contents thereof;

Fig. 10 is a chart for illustrating, by way of example, supplementary elements in an assembling operation together with the contents thereof and others;

Fig. 11 is a chart for illustrating, by way of example, results of an assemblability evaluation carried out according to another embodiment of the invention;

Fig. 12 is a chart showing the result of verification of accuracy in calculation of assembling cost in accordance with an assemblability evaluation method;

Fig. 13 is a chart for illustrating examples of design improvement in accordance with an assemblability evaluation method;

Fig. 14 is a flow chart for illustrating a process for evaluating synthetically an operability of an article or product;

Fig. 15 is a chart illustrating, by way of example, evaluation output data obtained as a result of execution of the processing in accordance with the processing flow shown in Fig. 14;

Fig. 16 is a view for illustrating, by way of example, the results of design improvement attained in accordance with the teachings of the invention, and

Fig. 17 is a view for illustrating, by way of example, the results of design improvement evaluation in accordance with a prior art method.

## DESCRIPTION OF THE PREFERRED EMBODIMENTS

Now, the present invention will be described in detail in conjunction with an exemplary or preferred embodiment thereof by reference to the accompanying drawings on the assumption that an article subjected to evaluation is an industrial product, a plurality of kinds of operations include a processing operation and an assembling operation, and that the states or basic elements are represented by surfaces to be processed (or machined in more concrete sense) and attachment movement or operation, respectively.

Fig. 1 is a schematic block diagram showing generally a hardware structure of a computer system on which a program can run for executing a method of evaluating synthetically processability and assemblability (hereinafter referred to as the processability/assemblability synthetic evaluation method) according to an embodiment of the invention. Referring to Fig. 1, the computer system shown therein includes as hardware components a processing unit 1 to serve generally for arithmetic operations or computation processings, a storage unit 2 for storing basic data and information, programs, input data and results of the processings and arithmetic operations, a display unit 3 for displaying input data and the results of the processings and arithmetic operation, a data input unit 4 such as a keyboard, mouse or the like, and a printer 5 for outputting the results of the arithmetic operations (results of evaluations).

Software to be incorporated in the computer hardware system and related to the processability/assemblability synthetic evaluation method may conveniently be classified into processability evaluation software, assemblability evaluation software and processability/assemblability synthetic evaluation software.

The basic data to be stored in the storage unit 2 may include the basic elements used in carrying out the processability evaluation method and the assemblability evaluation method, respectively, basic symbols ${}_mX$ and ${}_aX$ representing the basic elements, respectively, basic elimination scores ${}_{m\epsilon x}$ and ${}_{a\epsilon x}$ assigned to the basic elements, respectively, the supplementary elements, symbols ${}_m\chi$ and ${}_a\chi$ representing the supplementary elements, respectively, and correcting coefficients ${}_m\alpha$ and ${}_a\alpha$ provided for the supplementary elements, respectively.

On the other hand, the programs incorporated as software in the computer system includes evaluation processing programs for the processability evaluation, the assemblability evaluation and the processability/assemblability synthetic evaluation, respectively, and a program for displaying the results of these evaluations on the display unit 3 and for printing out them by the printer 5.

Now, description will be made in details of operations of the computer system carried out for arithmetically determining the processability evaluation score, the assemblability evaluation score and the processability/assemblability synthetic evaluation score.

Fig. 2 is a table diagram for illustrating, by way of example only, classification of a cylindrical part with respect to the basic elements representing the surfaces of the part to be processed or machined, respectively. In the table shown in Fig. 2, contents of the basic elements ${}_mX$(i.e. surfaces to be processed or machined) are illustrated at the third column. As can be seen in the figure, the first basic element 10 represents a planar surface (plane), while the second basic element 11 is a cylindrical surface (cylinder). As a third basic element, there may be considered a round bore surface (round hole). These basic elements ${}_mX$ exemplified by the abovementioned contents and others (illustration of which are omitted) define the predetermined surfaces to be processed or machined which can be derived or extracted directly from a product, a part of concern itself or information thereof described on a relevant design drawing. In this conjunction, it should however be mentioned that although the basic elements ${}_mX$ are defined in terms of the shapes or geometrical states of the surfaces to be machined in the case of the illustrated examples, they may be defined in terms of processing methods as adopted such as cutting, casting or the like processing steps. Alternatively, the basic elements ${}_mX$ may be defined as the representatives of combinations of the geometrical factors and the machining or processing steps, respectively.

Referring to the chart of Fig. 2, first column, there are listed the names of the basic elements ${}_mX$ which may be prepared in multiplicity. As the number of the basic elements ${}_mX$ increases, the accuracy of evaluation is correspondingly improved, although difficulty in handling or processing these basic elements is increased. Reversely, as the number of the basic elements decreases, evaluation accuracy is correspondingly degraded, although ease in processing them can be enhanced. In practical applications, the number of the basic elements should preferably be selected to be around twenty in the processings such as machining as well as in the assembling even in the case of a product or article of a relatively complicated configuration or structure.

The symbols corresponding to the individual basic elements X, respectively, are listed in a second column of the table chart shown in Fig. 2. In the case of the illustrated examples, the symbols are so determined as to facilitate association of the corresponding basic elements ${}_mX$. To this end, a symbol "P" may be used for "plane" with "C" for "cylinder" and "RH" for a round hole, by way of example only. There

are listed in the fourth column of the table shown in Fig. 2 exemplary values of basic elimination scores ${}_m\epsilon_x$ assigned to the individual basic elements ${}_mX$, respectively. In the case of the instant embodiment now under consideration, the basic element representing the planar surface (plane) P which is most easy to machine or process is taken as the standard element ${}_mX_o$, and the basic elimination score ${}_m\epsilon_x$ which is assigned to the standard element ${}_mX_o$ is set to "0" (zero). For the other basic elements ${}_mX$, the elimination scores ${}_m\epsilon_x$ to be assigned are increased in dependence on the degrees of difficulty in machining or processing these other basic elements relative to that of the standard element ${}_mX_o$. More specifically, in consideration of the imposed production conditions such as the number of products or articles to be manufactured and the processing means such as the types of processing machines or tools as used, the basic elimination scores ${}_m\epsilon_x$ given to the other basic elements ${}_mX$ than the standard element are determined to increase from "0" (zero) as the processing costs ${}_mC_x$ of the other basic elements ${}_mX$ increase beyond the processing cost ${}_mC_{xo}$ of the standard element ${}_mX_o$ under the same production conditions as that for the standard element ${}_mX_o$.

This relation may generally be expressed by a functional form as follows:

$${}_m\epsilon_x = {}_mf_1({}_mC_x) \qquad (1)$$

The above function or relation may be given by more specific form for practical applications as follows:

$${}_m\epsilon_x = a_1({}_mC_x/{}_mC_{xo}) + b_1 \text{ or}$$
$${}_m\epsilon_x = a_2({}_mC_x - {}_mC_{xo}) \qquad (2)$$

where $a_1$ and $a_2$ represent constants bearing a relation of $a_2 = a_1 \cdot {}_mC_{xo}$ to each other.

As a modification of the embodiment now under consideration, it is possible to use the processing time (i.e. time required for the processing or machining operation) ${}_mT_x$ in place of the operation or processing cost ${}_mC_x$ or indexes ${}_mI_x$ (${}_mC_x/{}_mC_{xo}$ or ${}_mT_x/{}_mT_{xo}$) derived by dividing the processing cost $C_x$ or the processing time ${}_mT_x$ by ${}_mC_{xo}$ or ${}_mT_{xo}$ for the standard element ${}_mX_o$, respectively. Alternatively, there may be employed a product of the processing time ${}_mT_x$ and a shop allotment rate ${}_mA$ representative of the cost involved in the shop or processing line per unit time.

Further, as the expressions for determining the basic elimination score ${}_m\epsilon_x$, there may be mentioned those which differ from one another in that ${}_m\epsilon_x$ tends to increase or decrease as a function of increase of ${}_mC_x$.

They are:

$${}_m\mathcal{E}_x = a_3 \left(1 - \frac{C_{xo}}{C_x}\right) \qquad \cdots\cdots\cdots(3)$$

$${}_m\mathcal{E}_x = a_2 \left(\frac{C_x}{C_{xo}} - 1\right) + b_2 \qquad \cdots\cdots\cdots(4)$$

$${}_m\mathcal{E}_x = a_3 \left(1 - \frac{C_{xo}}{Cx}\right) + b_3 \qquad \cdots\cdots\cdots(5)$$

Alternatively, in place of the basic elimination score ${}_m\epsilon_x$' there may be used basic coefficients ${}_m\epsilon_x$' which assume values greater or smaller than a predetermined value in accordance with the following expressions:

$$ {}_m\varepsilon_x' = C_1 \left(\frac{C_{xo}}{C_x}\right)^{\beta} + d_1 \qquad .......(6)$$

$$ {}_m\varepsilon_x' = C_2 \left(\frac{C_x}{C_{xo}}\right)^{\beta} + d_2 \qquad .......(7)$$

where $a_3$, $b_2$, $b_3$, $C_1$, $C_2$, $d_1$, $d_2$, $\alpha$ and $\beta$ represent constants, respectively. By selecting these constants appropriately, the rate or trend of increase/decrease of the basic index in accompanying the increase in the cost or time for processing the elementary elements can correspondingly be modified or changed.

As will be understood from the above, the basic elimination score represents a degree of difficulty of operation or processing for a basic element relative to the element standard on the assumption that the basic element is processed in the standard state. Accordingly, when the state of a basic element such as size, processing tolerance etc. changes, it is necessary to change correspondingly the elimination score. The rate or proportion of this change can be represented by an element which is referred to as the supplementary element ${}_m\chi$ .

Fig. 3 shows examples of the supplementary elements ${}_m\chi$ . As the supplementary elements, there may be mentioned the material m, size $\ell$, dimensional tolerance/surface roughness a and other factors which will readily occur to those skilled in the art.

For each of these supplementary elements (m, $\ell$, a, .....), the state thereof may be classified into one or more sub-states or items, whereon the supplementary standards ($m_0$, $\ell_0$, $a_0$, .....) are defined for the sub-states or items, respectively. Each of these items can be extracted from a product, parts or information described on a design drawing and represents a factor other than the basic element which can affect or influence the ease of processing (i.e. processability). As the supplementary indexes indicating the degrees of influence of the individual supplementary items, there is previously defined the supplementary coefficients (${}_m\alpha$ ). In conjunction with the supplementary elements, operation costs ${}_mC_{xxn}$ are displayed for the items (sub-states), respectively, which cost are expected to be involved in the processing performed under the same processing conditions.

As described above, there are defined the supplementary standards $m_o$, $a_o$ and $\ell_o$ for the supplementary elements m, a and $\ell$, respectively, where the costs expected to be involved in the processing or machining in the states corresponding to the supplementary standards, respectively, are calculated to be 126 yens in the case of the illustrated example. Accordingly, the processing costs ${}_mC_{xxo}$ for the supplementary standards $m_o$, $a_o$ and $\ell_o$ are assumed to be 126 yens which is equal to the process cost ${}_mC_x$ of the element standard ${}_mX_o$ shown in Fig. 2.

Now, definition is made in conjunction with the supplementary coefficient ${}_m\alpha_n$ that the processing cost involved in the processing for the state of the supplementary standard is one (unity), and that the supplementary coefficient ${}_m\alpha_n$ for each of items (states) resulting from division of the supplementary element by n increases starting from one in proportion to the increase in the processing cost ${}_mC_{xxn}$ for each item beyond the process cost ${}_mC_{xxo}$ (= ${}_mC_x$) involved in the processing of the supplementary standard ($m_o$, $a_o$ or $\ell_o$) under the same production condition. Such functional relation may be expressed as follows:

$$ {}_m\alpha_n = ({}_mC_{x\chi n}/{}_mC_{x\chi o})_{x\ mean} $$
$$ = ({}_mC_{x\chi n}/{}_mC_x)_{x\ mean} \qquad ....(8)$$

Thus, the value resulted from multiplication of the processing cost for the supplementary standard with the supplementary coefficient represents the processing cost involved in the processing of the supplementary element corresponding to the supplementary standard. Parenthetically, the suffix "x mean" affixed to the right-hand bracket in the above expression indicates that the supplementary coefficient ${}_m\alpha_n$ indicates a

mean value of the values obtained from the calculations for a plurality of the basic element ${}_mX$.

Although it is assumed in the case of the embodiment or example now under consideration that the processing cost ${}_mC_{xxo}$ for the supplementary standard is equal to the processing cost ${}_mC_x$ for the basic element, it is equally possible to define the processing cost ${}_mC_x$ to be equal to the processing cost ${}_mC_{x\chi n}$ for a given item of the supplementary element (i.e. ${}_mC_{x\chi n} = {}_mC_x$) or define the processing cost of the basic element as a mean value of the operation costs for all the supplementary standards (i.e. $({}_mC_{x\chi n})_{\chi n}$ mean $= {}_mC_x$).

Further, in place of or in addition to the processing costs ${}_mC_{x\chi n}$ and ${}_mC_{xxo}$, the processing times ${}_mT_{x\chi n}$ and ${}_mT_{xxo}$, the indexes thereof ${}_mI_{x\chi n}$ and ${}_mI_{xxo}$ or product of the shop allotment rates ${}_mA$ with $T_{x\chi n}$ and $T_{xxo}$ may be employed for evaluation.

Now, a part i processability evaluation score ${}_mE_i$ indicating the processability (ease of processing) of a part can be determined through a procedure which will be described below in detail.

Let's assume that for a part standard ${}_mb$ of a constituent part i to be processed, the basic element representing the surface of the part to be machined or processed is given by a single standard element ${}_mX_0$ and that the supplementary element is of a predetermined size ${}_m\ell_b$ (e.g. maximum size value of the part i). On these assumption, a processing cost ${}_mC_{bi}$ involved in the processing of the basic element of the part i is determined on the basis of the data shown in Fig. 3.

Accordingly, the processing cost ${}_mC_{bi}$ for the part standard ${}_mb$ is determined as a value representing the processing cost ${}_mC_{x\chi n}$ for ${}_mX$ = the standard element ${}_mX_o = P$, supplementary element ${}_m\chi = {}_m\ell_b$ thus defined and can be read out from the table shown in Fig. 3.

Subsequently, processing costs ${}_mC_{x\chi nij}$ for the supplementary elements ${}_m\chi_{nij}$ corresponding to the basic elements ${}_mX_{ij}$ in a sequence of processing steps j are determined, respectively, on the basis of the data shown in Fig. 3. More specifically, there are read out from the rightmost column labeled "PROCESS COST" in the table of Fig. 3 ${}_mX = {}_mX_{ij}$ , ${}_m\chi_n = {}_m\chi_{nij}$ and so forth.

In the following, ${}_mC_{x\chi nij}$ is briefly represented by ${}_mC_{ij}$. Accordingly, a sum $\Sigma\ {}_mC_{ij}$ resulting from additions of ${}_mC_{ij}$ in the order of the processing steps j represents the part processing cost ${}_mC_i$ required for finishing the part i. In other words,

${}_mC_i = \Sigma\ C_{ij}$ (9)

In case the part processing cost $C_i$ increases beyond the processing cost ${}_mC_{bi}$ of the part standard, the part processability evaluation score ${}_mE_i$ of that part is determined in accordance with a function which decreases or increases the evaluation score ${}_mE_i$ from a predetermined value (100). Namely,

$$ {}_mE_i = 100 \pm {}_me_i = 100 \pm {}_mg_i\ ({}_mC_i) $$

$$ = {}_mf_2\ ({}_mC_i) \qquad \ldots\ldots.(10) $$

where ${}_me_i = {}_mg_i\ ({}_mC_i)$ represents a part elimination score which increases when ${}_mC_i$ increases beyond ${}_mC_{bi}$.

More specifically, the part elimination score ${}_me_i$ may be given by

${}_me_i = a_{11}\ ({}_mC_i/{}_mC_{bi}) + b_{11}$ or
${}_me_i = a_{21}\ ({}_mC_i - {}_mC_{bi}) + b_{21}$ (11)

From the expression (1) and (8), i.e. ${}_m\epsilon_x = {}_mf_1\ ({}_mC_x)$ and ${}_m\alpha_n = ({}_mC_{x\chi n}/{}_mC_x)_{x\ mean}$'

$${}_m e_i = {}_m g_1 \left(\sum {}_m C_{ij}\right)$$

$$= {}_m g_1 \left(\sum {}_m C_{x\chi nij}\right)$$

$$\approx {}_m g_1 \left[\left(\sum \left({}_m \alpha_{mij} \cdot {}_m C_{xij}\right)\right]\right.$$

$$= {}_m g_1 \left\{\sum \left[{}_m \alpha_{nij} \cdot {}_m f_1^{-1} \left({}_m \varepsilon_{xij}\right)\right]\right\}$$

$$= {}_m g_2 \left({}_m \alpha_{nij} \cdot {}_m \varepsilon_{xij}\right) \qquad .......(12)$$

where

${}_m C_{x\chi n} / {}_m C_x \approx (C_{x\chi n}/C_x)\text{mean} = {}_m \alpha_n$ (13)

and $f_1^{-1}$ is an inverse function of $f_1$. Thus,

${}_m E_i = 100 \pm {}_m g_2 ({}_m \alpha_{nij}, {}_m \epsilon_{xij})$. (14)

By using this expression, the part processability evaluation score ${}_m E_i$ can be determined from the basic elimination score ${}_m \epsilon_{xij}$ and the supplementary coefficient ${}_m \alpha_{nij}$ which correspond to the basic element ${}_m X_{ij}$ and the supplementary element ${}_m \chi_{nij}$, respectively.

Further, the part processing cost ${}_m C_i$ can be determined by placing the value of ${}_m E_i$ determined from the expression (14) in the expression (10).

Thus, it is apparent that the part processability evaluation score ${}_m E_i$ and the part processing cost ${}_m C_i$ can conveniently be arithmetically determined on the basis of the basic elimination score and the supplementary coefficient read out from the table without using the data of ${}_m C_x$, ${}_m C_{x\chi n}$ and others shown in Figs. 2 and 3.

At this juncture, it should be noted that the processing costs ${}_m C_{bi}$ and ${}_m C_{x\chi nij}$ mentioned above can be replaced by the processing times ${}_m T_i$ and ${}_m T_{x\chi nij}$ or the respective indexes ${}_m I_i$ and ${}_m I_{x\chi nij}$ or alternatively by products ${}_m A_i \bullet {}_m T_i$ and ${}_m A_{ij}$ , ${}_m T_{x\chi nij}$ of the shop allotment rates ${}_m A_i$ and ${}_m A_{ij}$ and the processing time ${}_m T_i$ and ${}_m T_{x\chi nij}$ at the sequential processing steps j. Besides, the part elimination score ${}_m e_i$ may be replaced by a part coefficient ${}_m e_i'$ to thereby represent the part processability evaluation score ${}_m E_i$ by ${}_m E_i = 100\ {}_m ei'$. Parenthetically, the part coefficient ${}_m e_i' = g_{2'}({}_m C_i)$ increases or decreases its value when the part processing cost ${}_m C_i$ increases beyond the part standard processing cost ${}_m C_{bi}$.

Through the procedures described above, the part processability evaluation score ${}_m E_i$ and the part processing cost ${}_m C_i$ are determined for all of the parts, which is then followed by determination of the processing cost ${}_m C$ and the processing evaluation score ${}_m E$ of the product or article on the basis of the values ofthe score ${}_m E_i$ and the cost ${}_m C_i$ determined for the individual constituent parts, respectively.

More specifically, the processing cost of the product standard can be represented by the total sum of the processing costs ${}_m C_{bi}$ for the part standards, i.e. $\Sigma\ {}_m C_{bi}$.When the product processing cost ${}_m C = \Sigma\ {}_m C_i$ increases beyond the total sum $\Sigma\ {}_m C_{bi}$, the product processability evaluation score ${}_m E$ is decreased or increased from the predetermined value of "100", as described hereinbefore in conjunction with the part processability evaluation value ${}_m E_i$ in accordance with the following relation:

${}_m E = 100 \pm {}_m e = 100 \pm {}_m g_3 ({}_m C) = {}_m f_3 ({}_m C)$ (15)

where $_me = {}_mg_3(C)$ represents a product elimination score which increases as the product processing cost $_mC = \Sigma\, _mC_i$ increases beyond $\Sigma\, _mC_{bi}$, for example, in accordance with :

$_me = a_{12}\,(_mC/\Sigma\, _mC_{bi}) + b_{12}$ or
$_me = a_{22}\,(_mC - \Sigma\, _mC_{bi}) + b_{22}$ (16)

By placing $_mE_i = {}_mf_2\,(_mC_i)$ and $_me_i = {}_mg_1\,(_mC_i)$ given by the expression (10) in the expressions (15) and (16), the latter can be rewritten as follows:

$$_mE = {}_mf_3\,(_mC) = {}_mf_3\,(\sum {}_mC_i)$$
$$= {}_mf_3 \sum [{}_mf_2^{-1}\,(_mE_i)] = {}_mf_4(E_i) \quad .......(17)$$

$$_me = {}_mg_3\,(_mC) = {}_mg_3\,(\sum {}_mC_i)$$
$$= {}_mg_3 \left\{\sum [{}_mg_1^{-1}\,(_me_i)]\right\}$$
$$= {}_mg_4\,(_me_i) \quad .......(18)$$

where $_mf_2^{-1}$ and $_mg_1^{-1}$ represents inverse functions of $_mf_2$ and $_mg_1$, respectively.

Again, the processing costs $_mC$, $_mC_i$, and $_mC_{bi}$ can be replaced by the processing times $_mT$, $_mT_i$ and $_mT_{bi}$ or the relevant indexes $m_I$, $m_Ii$ and $_mI_{bi}$, respectively, or alternatively by the products of the shop rate $_mA_i$ for the part i and the abovementioned processing times, i.e. $\Sigma\,(_mA_i \cdot {}_mT_i)$, $_mA_i \bullet {}_mT_i$, $_mA_i \bullet {}_mT_{bi}$, etc.. Further, the product elimination score $_me$ may be replaced by a product coefficient $_me'$ such that $_mE = 100\, _me'$, where $_me'$ is given by $_me' = {}_mg_3'(c)$ and is increased or decreased when $_mC$ increases beyond $\Sigma$ - $(_mC_{bi})$.

In this manner, while $_mE_i$ represents the index indicating the degree of ease of processing (i.e. processability) of the part i the product processability evaluation score $_mE$ represents the index which indicates the degree of ease of processing (processability) of the product as a whole.

Since $_mf_4\,(E_i)$ can approximately be given by $(\Sigma\, _mE_i)/_mN$ (deriving method of which is omitted from description), $_mE$ may be determined as an approximate value as follows:

$$_mE \approx \frac{\sum {}_mE_i}{_mN} = {}_m\overline{E}_i \quad .......(19)$$

where $_mN$ represents the number of the parts to be processed.

In conjunction with determination of the processing costs $_mC$ and $_mC_i$ of a product and parts of concern as well as the times $_mT$ and $_mT_i$ required for the processings thereof, there may exist such a case in which processing costs $_mC'$ and $_mC_i'$ as well as processing times $_mT'$ and $_mT_i'$ of an existing product and parts similar to those of concern are known as real values. In that case, the processability evaluation scores $_mE$ and $_mE_i$ of the product and the part subjected to the evaluation and those $_mE'$ and $_mE_i'$ of the known product and part can be correlated in terms of $_mC$, $_mC_i$, $_mC'$ and $_mC_i'$, as follows:

$$\frac{{}_mC_i}{{}_mC_i'} = \frac{{}_mf_2^{-1}\ ({}_mE_i)}{{}_mf_2'^{-1}\ ({}_mE_i')} = {}_mf_5\ ({}_mE_i,\ {}_mE_i') \quad .......(20)$$

$\therefore {}_mC_i = {}_mC_i'\ {}_mf_5\ ({}_mE_i, {}_mE_i')$ (21)

Note that ${}_mf_5$ is derived on the assumption that formulae of $f_2^{-1}$ and $f_2'^{-1}$ as well as relevant constants are same because of comparison with the similar part.

$$\frac{{}_mC}{{}_mC'} = \frac{{}_mf_3^{-1}\ ({}_mE)}{{}_mf_3'^{-1}\ ({}_mE')} = {}_mf_6\ ({}_mE,\ {}_mE') \quad .......(22)$$

$\therefore {}_mC = {}_mC'\ {}_mf_6\ ({}_mE, {}_mE')$ (23)

Again note that $mf_6$ is derived on the assumption that formulae of ${}_mf_3^{-1}$ and ${}_mf_3'^{-1}$ as well as the constants involved therein are same because of comparison with the similar product.

Thus,

${}_mC_i = {}_mf_2^{-1}\ ({}_mE_i) = {}_mf_2'^{-1}\ ({}_mE_i)$ (24)

where ${}_mf_2'^{-1}$ determined from ${}_mC_i' = {}_mf_2'^{-1}\ ({}_mE_i')$ are used, and

${}_mC = {}_mf_3^{-1}\ ({}_mE) = {}_mf_3'^{-1}\ ({}_mE)$ (25)

where ${}_mf_3'^{-1}$ determined from ${}_mC' = {}_mf_3'^{-1}\ ({}_mE')$ are used.

The aforementioned four expression (21), (23) (24) and (25) for determining ${}_mC_i$ and ${}_mC$ mentioned above can provide great convenience for estimating ${}_mC_i$ and ${}_mC$ because there are required no more the numerous data of the processing costs ${}_mC_x$ and ${}_mC_{xxn}$, the constants for ${}_mf_2^{-1}$ and ${}_mf_3^{-1}$ and others shown in Figs. 2 and 3 and required for the expressions (9), (10) and (17) under various production conditions. Thus,

${}_mC_i = \Sigma\ {}_mC_{ij}$
${}_mC = \Sigma\ {}_mC_i$
${}_mC_i = {}_mf_2^{-1}\ ({}_mE_i)$
${}_mC = {}_mf_3^{-1}\ ({}_mE)$

In place of the processing costs ${}_mC$, ${}_mC_i$, ${}_mC'$ and ${}_mC_i'$, the processing times ${}_mT$, ${}_mT_i$, ${}_mT'$ and ${}_mT_i'$ as well as the relevant indexes ${}_mI$, ${}_mI_i$, ${}_mI'$ and ${}_mI_i'$ may be employed. Besides, the products of the production line rates ${}_mA_i$, ${}_mA_i'$and the processing times ${}_mT_i$, ${}_mT_i'$ for the parts i may be determined for the evaluation.

Fig. 4 is a flow chart for illustrating an evaluation procedure executed by a computer system.

Referring to Fig. 4, at a step 41, a plurality of basic elements ${}_mX$ and supplementary elements ${}_m\chi$ are classified in advance in accordance with the kinds of operations or processings (machinings) to be performed on partsw subjected to evaluation, whereon the element standard ${}_mX_o$ and the supplementary element standard ${}_m\chi_o$ are defined.

At a step 42, the part to be evaluated is expressed by symbols of the basic elements and the supplementary elements. Unless the symbols fitting precisely are available, the symbol of the basic element having the best similarity to that of the part of concern is selected.

At a step 43 shown in Fig. 4, the sysmbols representing the basic elements and the supplementary elements are inputted to the computer system on a part-by-part basis by means of the keyboard or the like of the input unit 4.

By executing the steps mentioned above for all the parts of a product of concern, the computer determines automatically by computation all or a part of the processability evaluation scores as well as the processing times and the processing costs for the parts as well as the product, whereon the results are displayed on the display screen 3 and outputted, if desired, through the printer 5 (steps 44-49).

In conjunction with the inputting of the basic elements and the supplementary elements as input data on the part-by-part basis, as described above, it is preferred to assign the symbols of the basic elements and the supplementary elements to individual keys of the keyboard, respectively. In Figs. 5A and 5B, examples of such keyboard are illustrated. In that case, the keys should preferably be assigned with the symbols such that the characters imprinted thereon can facilitate association with the symbols. By way of example, the symbols of the basic elements for which the alphabetic letters are used as they are may be assigned to the keys of the same alphabetic letters, respectively, as illustrated in Fig. 2, while the basic elements for which other symbols than the alphabetic letters are used may preferably be assigned to the function keys. By way of example, a key "S" shown in Fig. 5A may be assigned to a basic element. Alternatively, a sheet known as an overlay sheet may be laid over the keyboard, and relevant symbols may be written on the sheet at locations close to the individual keys, as shown in Fig. 5B, so that the symbol of the basic elements assigned to the keys can immediately be understood. As another alternative, a list of the element symbols may be generated on a display screen, wherein the element symbol as desired may be selected by designating with a cursor by means of a pointing device or the like. In this manner, there may occur various methods for inputting the symbols of the basic elements, and any suitable one may be adopted to this end. Parenthetically, the numerical data may be inputted by using the ten-keys.

In the case of the illustrated embodiment, the basic element "P" and others represented by alphabetic letters are assigned to the keys belonging to a group Pb, while the other symbols than the alphabetic letters are assigned to the keys belonging to a function key group Fn. Alternatively, a list of the element symbols may be generated on a display screen, wherein the element symbol as desired may be selected by designating with a cursor by means of a pointing device or the like. In this manner, there may occur various methods for inputting the symbols of the basic elements, and any suitable one may be adopted to this end. Needless to say, the numerical data may be inputted by using the ten-keys.

Fig. 6 illustrates, by way of example, the output display generated as a result of the processing of the input data by the computer system shown in Fig. 4.

Fig. 7 is a view showing the results of evaluation performed concerning the processability of various parts in accordance with the teachings of the invention incarnated in the illustrated embodiment. It can be seen from this figure that errors or deviations from the real values of processability evaluations of the products are confined to within ± 10 %.

In the case of the embodiment described above, the processability evaluation scores are determined by adopting a low-point method of scoring (i.e. method of reducing or substracting the score) from the standard score of "100". However, various modifications of this method of scoring are conceivable such as those exemplified by a method of determining the processability evaluation score by using the low-point method of scoring from the standard score of "0" (zero), method of determining the processability evaluation score according to a high-point method of scoring from the standard score of "0", a method of determining the processability evaluation score by the high-point method on the basis of the standard score of "100" and others. These methods can be realized in the substantially same manner as that described hereinbefore.

Fig. 8 shows an example of improvement accomplished by adopting a processability evaluation method according to the invention.

In the foregoing, the invention has been described in conjunction with the method for evaluating processability (ease or difficulty of processing) by taking the machining as the kind or type of operation, the surface to be machined as the state, it should be understood that the invention can equally be applied to evaluation of the assemblability (ease or difficulty of assembling operations) by taking an assembling operation as the type of operation and attachment movement as the state. The basic elements and others used in this assemblability evaluation are shown in Figs. 9 to 13. Incidentally, the assemblability evaluation method is discussed by several of the present inventors in Miyakawa et al's article entitled "The Hitachi New Assemblability Evaluation Method (AEM)" contained in Transactions of the North American Manufacturing Research Institute of SME (1990, pp. 352-359) held May 23 to 25, 1990 at Pennsylvania State University, the disclosure of which is hereby incorporated by reference.

Figs. 9 and 10 show basic elements ${}_{a}X$ and supplementary element ${}_{a}\chi$ resulting from classification of an assembling or attachment operation involved in assembling or attaching one part to another part in the same formats as those shown in Figs. 2 and 3 for the basic element ${}_{m}X$ and the supplementary elements ${}_{m}X$ of the surfaces of the parts to be processed or machined. By using these basic element ${}_{a}X$ and the supplementary element ${}_{a}\chi$ , a part assemblability evaluation score ${}_{a}E_{i}$, a product or article assemblability

evaluation score ${}_aE$ and others can be determined through the similar procedures described hereinbefore in conjunction with the part processability evaluation score ${}_mE_i$ and the article or product assemblability evaluation score ${}_mE$. More specifically, the descriptions made concerning the processability evaluation scores by reference to Figs. 2 and 3 may apply to the determination of the assemblability evaluation scores ${}_aE_i$ and ${}_aE$ by reading the "surface to be processed or machined" as "attachment movement or operation" while reading "processing or machining" as "assembling or attachment" with the prefix "m" affixed to the symbols being replaced by "a". Thus, the part assemblability evaluation score ${}_aE_i$ and the product assemblability evaluation score ${}_aE$ can be determined in accordance with:

${}_aE_i = 100 \pm {}_ag_2 ({}_a\alpha_{nij}, {}_a\epsilon_{xij})$ (26)
${}_aE = {}_af_4 ({}_aE_i)$ (27)

Through the procedures described above, the processing operation as well as the assembling operation of a product or article and a part can be evaluated for different kinds of operations independently. However, synthetic evaluation for both the processing operation and the assembling operation can not be made simply by adopting straightforwardly the evaluation procedures described in the foregoing. In order to make it possible to perform the synthetic evaluation, the individual operations such as the processing or machining operation and the assembling operation may synthetically be combined to a more general kind of operation such as what may be referred to as the synthetic operation or manufacturing or production operation, whereon synthetic evaluation may be performed by defining basic elements ${}_TX$, supplementary elements ${}_T\chi$ (the prefix "T" is to replace the previously used "m" and "a") etc. for the combined (or synthetic) operation (e.g. manufacturing operation including a processing operation and an assembling operation) in the same manner as in the case of the processability evaluation and the assemblability evaluation. However, intolerable lots of time and labor will be required to define the basic elements ${}_TX$, the supplementary element ${}_T\chi$ and others for the synthetic operation after having defined individually the basic elements ${}_mX$, ${}_aX$, the supplementary elements ${}_m\chi$, ${}_a\chi$ and others for the processing operation and the assembling operation, respectively, for the analyses thereof with the aid of these elements and then perform the synthetic analyses by collecting and/or arithmetically determining the data corresponding to the basic elements ${}_TX$ and the supplementary elements ${}_T\chi$ involved in the synthetic operation for thereby determining the basic elimination score ${}_T\epsilon_x$ and the supplementary coefficient ${}_T\alpha_n$ for the synthetic operation. Under the circumstances, it is proposed according to another aspect of the invention to arithmetically determine the synthetic evaluation scores (which may also be referred to as the manufacturability or producibility evaluation scores) ${}_TE_i$ and ${}_TE$ on the basis of the basic elements ${}_mX$, ${}_aX$ and the supplementary elements ${}_m\chi$,${}_a\chi$ for the processing and assembling operation without resorting to the use of the basic elements ${}_TX$ and the supplementary elements ${}_T\chi$ for the synthetic operation.

More specifically, the part standard ${}_Tb$ for the synthetic operation (including a plurality of different kinds of operations such as the manufacturing or production operation including the processing and assembling operations) of a part i is defined as a combination of the part standards ${}_mb$ and ${}_ab$ in the processing and assembling operations described hereinbefore, whereon the synthetic or total operation cost ${}_TC_{bi}$ of the part standard ${}_Tb$ is defined as a sum of ${}_mC_{bi}$ (standard processing cost) and $aC_{bi}$ (standard assembling cost), while the total operation cost ${}_TC_i$ is defined as a sum of ${}_mC_i$ (part processing cost) and ${}_aC_i$ (part assembling or attachment cost) with the total operation cost ${}_TC = \Sigma\, {}_TC_i$ of a product being then given by ${}_TC = {}_mC + {}_aC$. On these conditions, a synthetic part evaluation score (e.g. part producibility evaluation score) ${}_TE\$i$ can be determined in accordance with the previously mentioned expressions for determining the part processability evaluation score ${}_mE_i$ through a modification of replacing the prefix "m" by "T", as follows:

$$ {}_TE_i = 100 \pm {}_Te_i $$

$$ = 100 \pm {}_Tg_1 ({}_TC_i) $$

$$ = {}_Tf_2 ({}_TC_i) = {}_Tf_2 ({}_mC_i + {}_aC_i) $$

$$ = {}_Tf_2 [{}_mf_2^{-1} ({}_mE_i) + {}_af_2^{-1} ({}_aE_i)] \qquad .......(28) $$

$$ {}_Te_i = {}_Tg_1 ({}_TC_i) = {}_Tg_1 ({}_mC_i + {}_aC_i) $$

$$ = {}_Tg_1 (\sum {}_mC_{ij} + \sum {}_aC_{ij}) $$

$$ = {}_Tg_1 \{ \sum [{}_m\alpha_{nij} \cdot {}_mf_1^{-1} ({}_m\varepsilon_{xij})] $$

$$ + \sum [{}_a\alpha_{nij} \cdot {}_af_1^{-1} ({}_a\varepsilon_{xij})] \} $$

$$ = {}_Tg_2 ({}_m\alpha_{nij}, {}_m\varepsilon_{xij}, {}_a\alpha_{nij}, {}_a\varepsilon_{xij}) \qquad .......(29) $$

As will be seen from the above, the synthetic part evaluation score ${}_TE_i$ can be determined on the basis of ${}_mX$, ${}_m\chi$ , ${}_aX$, ${}_a\chi$ which in turn can be arithmetically determined from ${}_m\epsilon_x$, ${}_m\alpha_n$, ${}_a\epsilon_x$, ${}_a\alpha_n$ or ${}_mE_i$, ${}_aE_i$ without resorting to definitions of the basic elements ${}_TX$ and the supplementary elements ${}_T\chi$ for the synthetic evaluation.

The synthetic evaluation score ${}_TE$ and others can equally be calculated in accordance with the relations mentioned hereinbefore in conjunction with the processability evaluation by simply replacing the prefix "m" by "T", as follows:

$$_TE = 100 \pm {}_Te = 100 \pm {}_Tg_3\ ({}_TC)$$
$$= {}_Tf_3\ ({}_TC) = {}_Tf_4\ ({}_TE_i)$$
$$= \frac{\sum {}_TE_i}{{}_TN} = {}_T\bar{E}_i \qquad .......(30)$$

$$_Te = {}_Tg_3\ ({}_TC) = {}_Tg_3\ (\sum {}_TC_i)$$
$$= {}_Tg_3 \{ \sum [{}_Tg_1^{-1}({}_Te_i)] \}$$
$$= {}_Tg_4\ ({}_Te_i) \qquad .......(31)$$

$$_TC_i = {}_TC_i'{}_Tf_5\ ({}_TE_i,\ {}_TE_i')$$
$$= {}_Tf_2'^{-1}\ ({}_TE_i) \qquad .......(32)$$

$_TC = {}_TC'{}_Tf_6\ ({}_TE, {}_TE') = {}_mf_3'^{-1}\ ({}_TE)$ (33)

In addition to or in place of the synthetic or total operation costs $_TC$, $_TC_i$, $_TC'$, and $_TC'_i$, there may be derived the total operation time $_TT$, $_TTi$, $_TT'$ and $_TT'_i$ or indexes therefor such as $_TI$, $_TI_i$, $_TI'$ and $_TI_i'$ or products of the shop allotment rates $_mA_i$, $_mA_i'$, $_aA_i$ and $_aA_i'$ and $_mT_i$, $_mT_i'$, $_aT_i$ and $_aT_i'$, i.e. $\Sigma\ ({}_mA_i\ .\ {}_mT_i\ +\ {}_aA_i\ .\ {}_aT_i)$, $_mA_i\ .\ {}_mT_i\ +\ {}_aA_i\ .\ {}_aT_i$, $\Sigma\ ({}_mA_i'\ .\ {}_mT_i'\ +\ {}_aA_i'\ .\ {}_aT_i')$ and $_mA_i'\ .\ {}_mT_i\ +\ {}_aA_i'\ .\ {}_aT_i'$.

Fig. 14 is a flow chart for illustrating, by way of example, a procedure for performing the processability evaluation, assemblability evaluation and the processing/assemblability synthetic evaluation by using the basic elements and the supplementary elements of constituent parts with the aid of a computer system. Referring to Fig. 14, at a step 1, the part subjected to evaluation is expressed by a combination of symbols representing the basic element and the supplementary element, respectively, of the part. In this case, unless the symbol representing exactly ther basic element is available, that of a basic element bearing the best similarity to the basic element under evaluation is selected. At a step 2, data of the symbols of the basic elements and the supplementary elements such as $_mX_{ij}$, $_m\chi_{ij}$, $_aX_{ij}$, $_a\chi_{ij}$ as well as the number $m_i$ of the parts i used in a product of concern are inputted through the keyboard or the like of the input unit 4. The succeeding processings and operations are executed by the computer. At a step 3, the data inputted through the keyboard are displayed on a screen of the display unit 3. At step 4, there are read out from the tables shown in Figs. 2, 3, 9 and 10 stored in the storage unit 2 the basic elimination scores $_m\epsilon_{xij}$, $_a\epsilon_{xij}$ and supplementary coefficients $_m\chi_{nij}$, $_a\chi_{nij}$ which correspond to the symbols of the basic elements and the supplementary elements used for expressing the surface to be processed and the attachment movement of the part to be evaluated, respectively. At a step 5, the part processability evaluation score $_mE_i$ and the part assemblability evaluation score $_aE_i$ are arithmetically determined in accordance with the expressions (14) and (26), respectively, on the basis of the basic elimination scores, the supplementary coefficients and other data as read out. The part processability evaluation score $_mE_i$ and the part assemblability evaluation score $_aE_i$ thus determined are stored in the memory or storage unit. At a step 6, the part synthetic evaluation score (part producibility or manufacturability evaluation score) is arithmetically determined on the basis of

the part processability evaluation score and the part assemblability evaluation score in accordance with the expression (28), the result of which is stored in the memory. At a step 7, it is checked whether or not the abovementioned processing step 6 has been performed for all the parts of concern. When the answer of the decision step 7 is negative (No), the processing step 6 is repeated until it has completely been performed for all of the parts. At a step 8, the synthetic production evaluation score (producibility evaluation score) $_{T}E$ is determined in accordance with the expressions (28), (29) and (30) mentioned previously in terms of a mean representative numerical value on the basis of the assemblability evaluation scores $_{m}E_{i}$ for all the parts constituting the product or article of concern and the part processability evaluation scores determined for all the parts to be processed or machined. At a step 9, the result is displayed on the display unit 3 and at the same time outputted through the printer. Parenthetically, it should be mentioned that the computer can be so programmed as to automatically calculate all or a part of the processability evaluation score, the processing time and the processing cost as well as the assemblability evaluation score, the assembling time and the assembling cost on a part-by-part basis or on a product-by-product basis together with the synthetic evaluation score (manufacturability evaluation score), the results of which may of course be displayed on the display unit and/or printed out, as occasion requires.

Fig. 15 shows examples of the data obtained as the result of processings executed by the computer system concerning the processability evaluation score, estimated processing cost, assemblability evaluation score, estimated assembling cost, producibility (synthetic) evaluation score and the estimated production cost. As will be seen from Fig. 15, there can be obtained as the output data, the part assemblability evaluation scores and the estimated assembling costs for all the parts constituting a product or article of concern, the part processability evaluation scores, the estimated processing costs, the part producibility (synthetic) evaluation score and the estimated part production cost together with the product assemblability evaluation score, estimated assembling cost, processability evaluation score, estimated processing cost, producibility evaluation score and the estimated production cost for the product of concern in terms of the sum values or mean representative values of the corresponding evaluation values and the estimated costs of the constituent parts.

Fig. 16 shows, by way of example, the results of the processability evaluation, assemblability evaluation and the processability/assemblability synthetic evaluation performed by the computer system shown in Fig. 1 for structure models A and B shown in Fig. 17. In the case of the prior art evaluation method illustrated in Fig. 7, it can not be decided which of the structure models A and B is better. In contrast, the processability/assemblability evaluation method according to the invention renders it possible to determine at onee that the structure design A is better, as can be seen from Fig. 16.

Although the foregoing description is directed to the synthetical evaluation of the processability and the assemblability, it should be understood that the invention can equally be applied to the synthetical evaluation of other kinds of operations. It should further be added that the invention can equally be applied to evaluation of various kinds of operations such as manufacturing operation, inspecting operation, transportation, sales, installing operation, use and maintenance operation for evaluating effectively eases or difficulties thereof, respectively, through substantially same procedure as that described hereinbefore in conjunction with the illustrated embodiments of the invention.

As will now be appreciated from the foregoing description, it is possible according to the teaching of the invention to evaluate the operabilities of individual parts for each of different operations such as processing (machining), assembling and other operation at an earlier stage in the design and development without need for abundance of experiences. Besides, ease or difficulty of synthetic operations including a combination of plural different kinds of operation such as the processability and the assemblability can quantitatively be evaluated even by those who are not skilled in the art without necessity for additionally carrying out analyses corresponding to the operations of different kinds, respectively. As an overall result, the designer himself or herself can create a design of improved quality within a relatively short time by evaluating synthetically and improving the design at an earlier stage.

Thus, the productivity in general is improved with the number of steps involved in the processing or machining and assembling being reduced, while the area to be improved can easily be pointed out, which in turn contributes to promotion of improvement as well as ease of processing and assembling of constituent parts and products or article as a whole. Additionally, by virtue of the quantitative evaluation capable of being understood even by those unskilled, the evaluation indexes as obtained can be utilized in common to design engineers, whereby production engineers and management engineers, improvement can be accomplished from numerous and different standpoints with the productivity being enhanced significantly with a considerably reduced number of manufacturing steps. Furthermore, factory automation (FA) inclusive of automation of individual manufacturing steps can be implemented easily without requiring lots of time and labor because of simplification of the processing (machining) and assembling owing to the improved

producibility. Additionally, reduction of time consumption in designing as well as evaluatability of productivity and capability of design improvement at earlier stage allow trial design or re-designing to be repeated while ensuring remarkable reduction of time required for improving the design. On the other hand, because cost evaluation of the improved design for enhancing the productivity can be made synthetically and easily by the designer himself or herself without relying design evaluation and cost estimation on an expert, the time for preparation of basic data for the estimation as well as the latency time for having the result of estimation can significantly be reduced to another great advantage.

Finally, since the expenditure for parts or raw materials therefor as well as management thereof can be reduced by virtue of proper and appropriate designing of geometrical factors of products and constituent parts. Besides, owing to simplification of the manufacturing processes and operation, materials and tools used therefor can be selected correctly, whereby the amount of the material and the number of the tools as required can be decreased, leading to additional reduction in the manufacturing cost. The automated machine can also be improved in respect to the reliability of operation with quality of the product being correspondingly improved. Thus, due to simplification of structure of the product and the manufacturing processes, not only the quality and operation reliability of the products but also the reliability of the automated machine can remarkably be enhanced to further significant advantages.

## Claims

**1.** A method of evaluating ease of operation of at least one kind to be performed on an article subjected to evaluation of operability, comprising:

a step of categorizing states corresponding to kinds of operations to be performed on an article or a part thereof subjected to the evaluation into plural kinds of basic elements (${}_mX$, ${}_aX$);

a step of selecting the basic element having a predetermined state to serve as the standard from said plural kinds of the basic elements and defining said selected basic element as a standard element (${}_mX_o$, ${}_aX_o$);

a step of determining a basic index (${}_m\epsilon_x$, ${}_a\epsilon_x$) indicating a degree of difficulty (or ease) of said operation for each of said categorized basic elements in accordance with a first predetermined index formula (expresions (1), (2)) for comparing costs (${}_mC_x$, ${}_aC_x$) and times (${}_mT_x$, ${}_aT_x$) involved in said operation to be performed on said basic elements or at least one of indexes (${}_mI_x$, ${}_aI_x$) thereof (said cost and time) with cost and time involved in performing said operation on said standard element or at least one of indexes thereof;

a step of defining an article or a part having a predetermined state ($m_o$, $a_o$, ${}_m\ell_b$) to serve as the standard for the article or the part to be evaluated as an article or part standard (${}_mb$, ${}_ab$) for the article or parts to be evaluated; and

a step of responding to inputting of said basic elements (${}_mX$, ${}_aX$) indicating the states (m, a, $\ell$) corresponding to the kinds of operations to be performed on said article or said part under evaluation or said basic index (${}_m\epsilon_x$, ${}_a\epsilon_x$), wherein when the cost and time involved in said operation performed on said article or said part under evaluation or at least one of the indexes thereof which are determined by said first index formula increases beyond the cost and time required for the operation performed on said article standard or said part standard (${}_mb$, ${}_ab$) or the indexes thereof, an article or part operability index (${}_mE_i$, ${}_aE_i$) indicating the degree of difficulty of operation performed on said article or part under evaluation is calculated by placing a value corresponding to said determined operability index in a second index formula (expressions (10), (11), (12), (26)) for decreasing or increasing said operability index from a predetermined standard value (100) therefor.

**2.** An article operability evaluating method according to claim 1, further comprising steps of:

extracting a factor participating in the cost and time involved in the operation to be performed on said article or said part for each of said states (m, a, $\ell$) of said article or said part under evaluation in addition to said basic element (${}_mX$ ${}_aX$), said factor being defined as supplementary elements (${}_m\chi$, ${}_a\chi$);

identifying discriminatively at least one state for each of said supplementary elements and selecting from the states identified discriminatively for said supplementary elements, respectively, a predetermined state ($m_o$, $a_o$, $\ell_o$) which is to serve as a standard, said predetermined state being defined as a supplementary standard;

determining a supplementary index (${}_m\alpha$, ${}_a\alpha$) indicating a degree of difficulty of said operation for each of said discriminatively identified states in accordance with a first predetermined supplementary index formula (expression (8)) for comparing the cost and time involved in the operation to be performed on each of said discriminatively identified state or at least one of indexes thereof with the

cost and time involved in the operation performed on said supplementary standard or at least one of the indexes thereof; and

correcting said basic index by said supplementary index.

**3.** An article operability evaluating method according to claim 1, further comprising steps of:

calculating a part operability index ($_mE_i$, $_aE_i$) for each of plural parts constituting the article subjected to evaluation; and

determining a total value of the costs ($_mC_i$, $_aC_i$) and times ($_mT_i$, $_aT_i$) involved in the operations performed on said parts or indexes ($_mI_i$, $_aI_i$) thereof from said plurality of the calculated part operability indexes in accordance with said first index formula (expression (10));

wherein when said total value increases beyond a total value of the cost and time involved in the operation performed on said part standard or the index thereof, an article or a part operability index ($_mE$, $_aE$) indicating a degree of difficulty of operation for said article under evaluation as a whole is calculated by placing the operability index ($_mE$, $_aE$) of said plural parts of said article under evaluation in the second index formula (expression (15)) for decreasing or increasing said article operability index ($_mE$, $_aE$) from a predetermined standard index value (100).

**4.** An article operability evaluating method according to claim 1, further comprising a step of:

calculating said part operability indexes ($_mE_i$, $_aE_i$) for a plurality of parts constituting said article under evaluation;

wherein said article operability index ($_mE$) is calculated in accordance with a part index mean value deriving formula (expression (19)) for determining a mean value of said plurality of calculated part operability indexes.

**5.** An article operability evaluating method according to claim 1, wherein calculation of the cost and time involved in the operation to be performed on the article or the part or indexes thereof is performed in accordance with a predetermined comparison formula (expressions (20) to (25) for comparing real values of the cost ($_mC_i'$) and time ($_mT_i'$) or indexes ($_mI_i'$) thereof involved in the operation performed on an existing article or a part or part having similarity to said article or part under evaluation with the operability index of the latter.

**6.** An apparatus for evaluating operability of an article or a part, comprising:

input means (4) for inputting data of an article or a part subjected to evaluation and an evaluation request;

storage means for storing basic elements defined in terms of states of said article or a part or part categorized in correspondence to the operations to be performed on said article or part, indexes indicating degrees of difficulty of operations for said basic elements, indexes of said article or part having influences to the operability evaluation in addition to said indexes for said basic elements, a relation program indicating relations between the index of a standard element of said basic element and operation cost and/or process time or indexes thereof, a program for determining an operability evaluation score of said article or part on the basis of said indexes, the data of said article or part and the result of the calculation for evaluation;

arithmetic means (1) responsive to the input of said evaluation request through said input means for calculating degree of difficulty of operation to be performed on said article or part under the evaluation on the basis of the data and the programs read out from said storage means; and

display means (3) responsive to the output of said arithmetic means for displaying said degree of difficulty of operation calculated by said arithmetic means in the form of an operability evaluation score as desired by user.

**7.** A method of evaluating operability of an article, comprising:

a first step of classfying operation to be performed on an article or a part into plural kinds of operations (Fig. 2, Fig. 9);

a second step of evaluating degree of ease of operation (operability, $_mE_i$, $_aE_i$) for each of said plural kinds of operations (steps 1-5 in Fig. 14); and

a third step of evaluating synthetically the ease of said plural kinds of operations to be performed on said parts or said article in accordance with a function formula (expressions (28), (29)) for synthesizing the results of the evaluation made at said second step (step 6 in Fig. 14).

**8.** An article synthetic operability evaluating method according to claim 7, wherein at said second step for evaluating ease of operation for each of said plural kinds of operatiions, a states (m, a, $\overline{\ell}$) for said plural kinds of operations are defined as basic elements ($_mX$, $_aX$) and supplementary elements ($_m\chi$, $_a\chi$) while a predetermined state ($m_o$, $a_o$, $_m\ell_b$) serving as standard for the article or part are defined as an article standard or a part standard ($_mb$, $_ab$),

wherein said synthetic operability evaluation index ($_TE_i$, $_TE$) for plural kinds of said operations is determined in accordance with a function formula (expressions (10), (11), (15), (16)) prepared such that when a sum ($_TC_i$ = $_mC_i$ + $_aC_i$, $_TT_i$ = $_mT_i$ + $_aT_i$,or $_TI_i$ = $_mI_i$ + $_aI_i$) of operation cost ($_mC_i$, $_aC_i$) and operation time ($_mT_i$, $_aT_i$) and index ($_mI_i$, $_aI_i$) involved in operation for each of said plural kinds of operations to be performed on said parts and said article with said basic elements and said supplementary elements for all the parts (i) constituting said article under evaluation increases relative to a sum ($_TC_{bi}$ = $_mC_b$i + a$C_{bi}$, $_TT_{bi}$ = $_mT_{xbi}$ + $_aT_{bi}$,or $_TI_{bi}$ = $_mI_{bi}$ + $_aI_{bi}$) of the corresponding values of said part standard or said article standard, said synthetic operability evaluation index for plural kinds of operations is decreased or incleased.

FIG 1

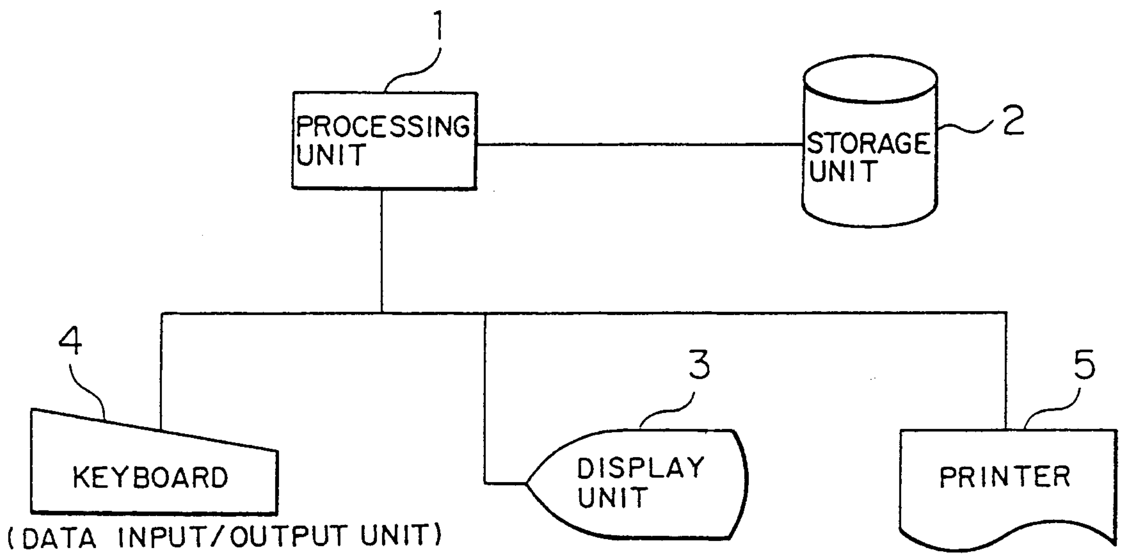


FIG. 2

(Note) $m\mathcal{E}x = mf_1(mCx) = mf_{11}(mTx) = mf_{21}(mIx)$

| BASIC ELEMENTS (mX) | | | BASIC ELIMINATION SCORE ($m\mathcal{E}x$) (Note) | PROCESS COST (mCx) | PROCESS TIME (mTx) | PROCESS COST INDEX (mIx) |
|---|---|---|---|---|---|---|
| NAME | SYMBOL (mX) | CONTENT | | | | |
| PLANAR SURFACE (Plane) | P (mXo) | 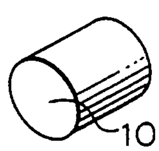 10 | 0 | 126 yens | 2 min. | 100 |
| CYLINDRICAL SURFACE (Cylinder) | C | 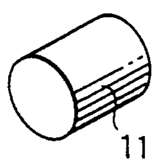 11 | 2 | 189 yens | 3 min. | 150 |
| ROUND BORE SURFACE (Round Hole) | RH | 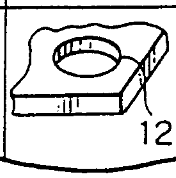 12 | | | | |

FIG. 3

(Note) NUMERIC VALUE: $m\alpha_n = \left[\frac{mCxX_n}{mCx}\right] \times$ mean

| SUPPLEMENTARY ELEMENTS (mX) | | | | | SUPPLEMENTARY COEFFICIENT NUMERIC VALUE ($m\alpha$) | | PROCESS COST ($mCxX_n$) | |
|---|---|---|---|---|---|---|---|---|
| NAME | SYMBOL ($x$) | IDENTIFICATION | | | | | | |
| | | n | SYMBOL ($mX_n$) | CONTENT | NUMERIC VALUE (Note) ($m\alpha_n$) | SYMBOL ($m\alpha$) | mX = P | mX = C |
| MATERIAL | m | 1 | S ($m_1$=mo) | STEEL(mo) | 1.0 | $\rho$ | 126 yens | 189 yens |
| | | 2 | a (m2) | ALUMINUM ALLOY | 0.9 | | 107 | 174 |
| | | 3 | | | | | | |
| DIMENSIONAL TOLERANCE/SURFACE ROUGHNESS | a | 1 | ($a_1$=$a_2$) | ROUGH ▽ | 1.0 | $\mu$ | 126 | 189 |
| | | 2 | ($a_2$) | MODERATE ▽▽ | 1.3 | | 165 | 242 |
| | | 3 | | FINE | | | | |
| | | 4 | | | | | | |
| SIZE | ℓ | 1 | ($\ell_1$=$\ell_0$) | | | $\lambda$ | 126 | 189 |
| | | 2 | | | | | | |

FIG. 4

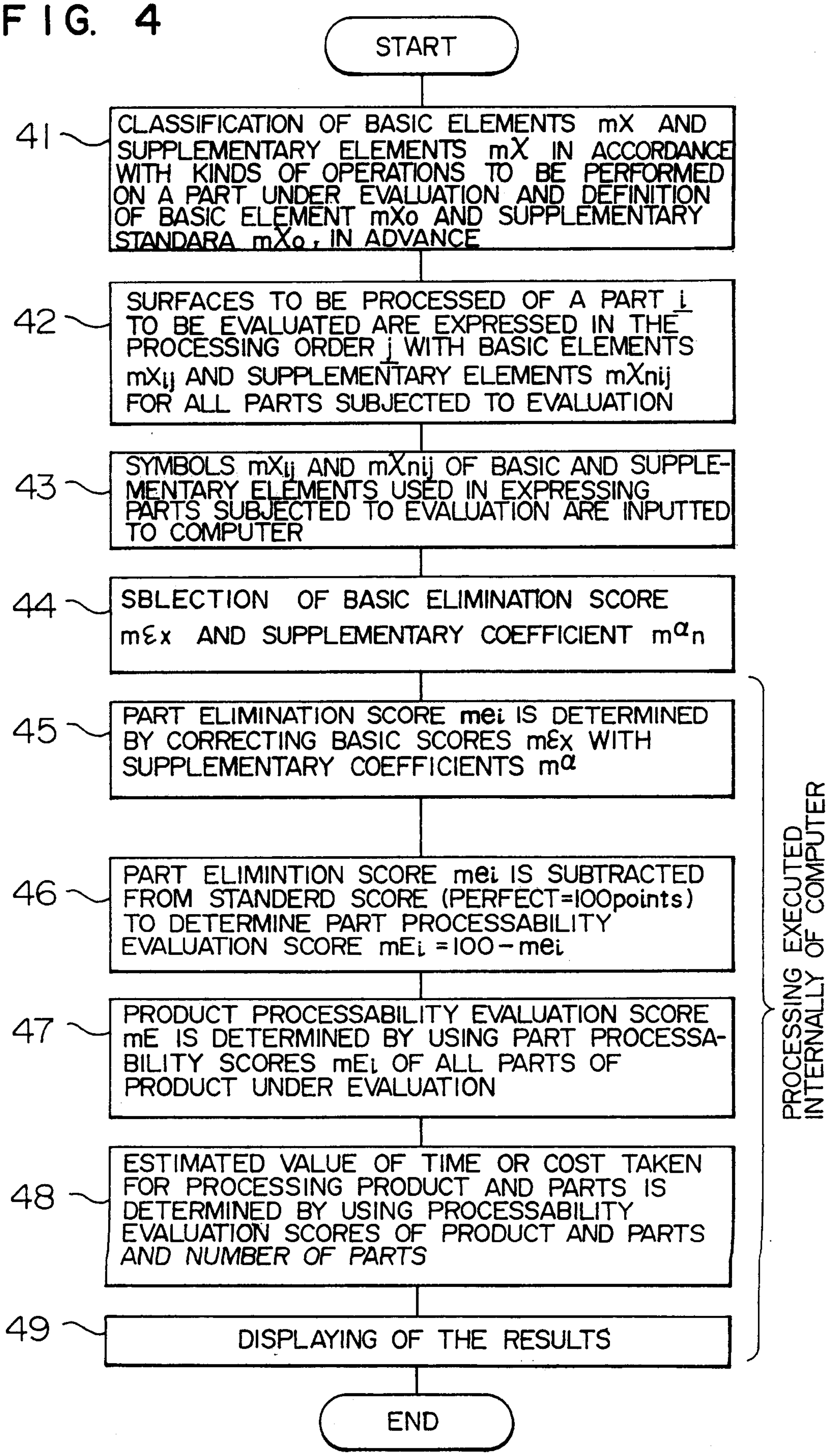
START
41
CLASSIFICATION OF BASIC ELEMENTS mX AND SUPPLEMENTARY ELEMENTS mX IN ACCORDANCE WITH KINDS OF OPERATIONS TO BE PERFORMED ON A PART UNDER EVALUATION AND DEFINITION OF BASIC ELEMENT mXo AND SUPPLEMENTARY STANDARA mXo, IN ADVANCE
42
SURFACES TO BE PROCESSED OF A PART i TO BE EVALUATED ARE EXPRESSED IN THE PROCESSING ORDER j WITH BASIC ELEMENTS mXij AND SUPPLEMENTARY ELEMENTS mXnij FOR ALL PARTS SUBJECTED TO EVALUATION
43
SYMBOLS mXij AND mXnij OF BASIC AND SUPPLEMENTARY ELEMENTS USED IN EXPRESSING PARTS SUBJECTED TO EVALUATION ARE INPUTTED TO COMPUTER
44
SBLECTION OF BASIC ELIMINATION SCORE mεx AND SUPPLEMENTARY COEFFICIENT mαn
45
PART ELIMINATION SCORE mei IS DETERMINED BY CORRECTING BASIC SCORES mεx WITH SUPPLEMENTARY COEFFICIENTS mα
46
PART ELIMINTION SCORE mei IS SUBTRACTED FROM STANDERD SCORE (PERFECT=100points) TO DETERMINE PART PROCESSABILITY EVALUATION SCORE mEi =100−mei
47
PRODUCT PROCESSABILITY EVALUATION SCORE mE IS DETERMINED BY USING PART PROCESSABILITY SCORES mEi OF ALL PARTS OF PRODUCT UNDER EVALUATION
48
ESTIMATED VALUE OF TIME OR COST TAKEN FOR PROCESSING PRODUCT AND PARTS IS DETERMINED BY USING PROCESSABILITY EVALUATION SCORES OF PRODUCT AND PARTS AND NUMBER OF PARTS
49
DISPLAYING OF THE RESULTS
PROCESSING EXECUTED INTERNALLY OF COMPUTER
END

FIG. 5A

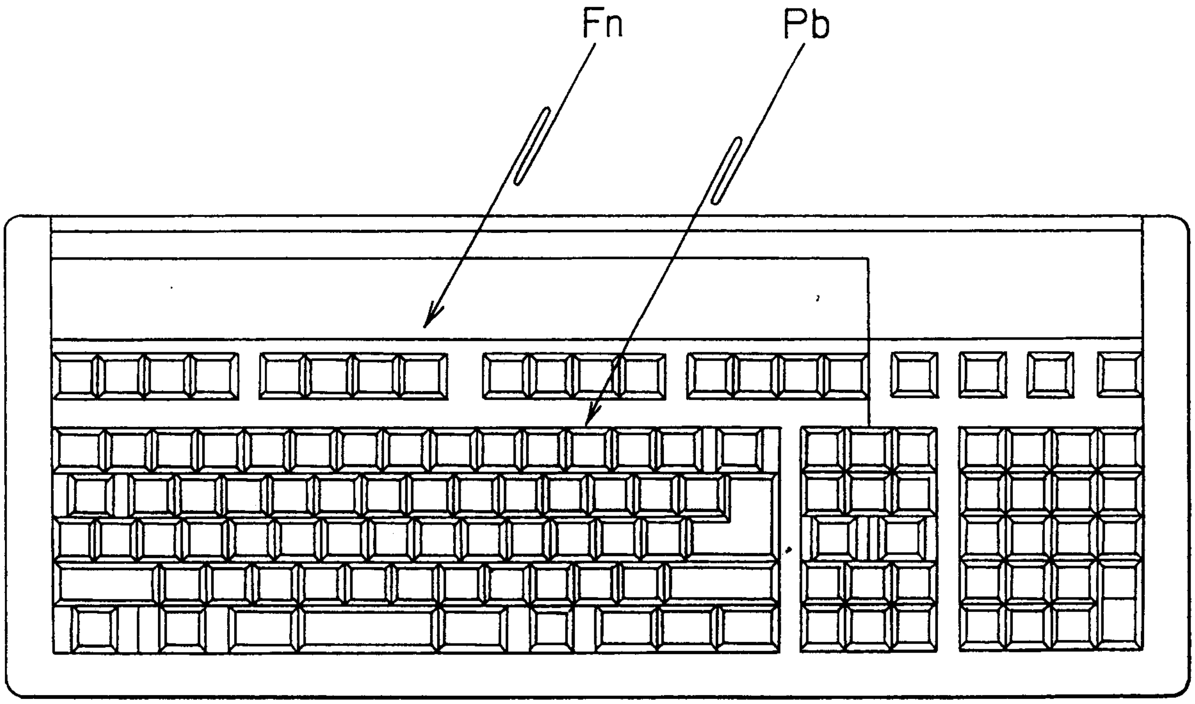
Fn
Pb

FIG. 5B

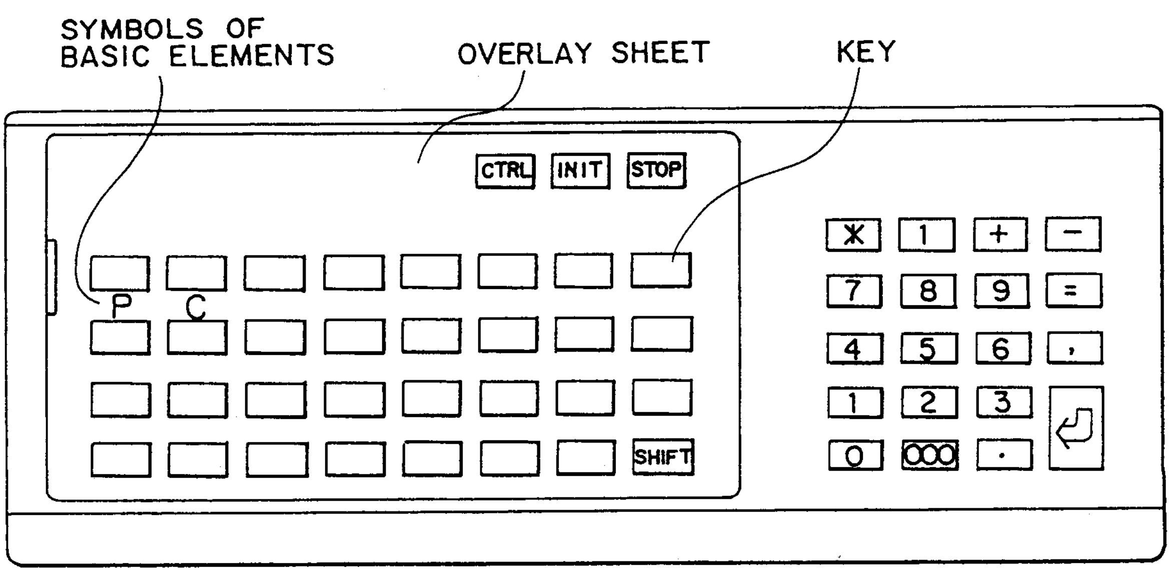
SYMBOLS OF BASIC ELEMENTS
OVERLAY SHEET
KEY
CTRL
INIT
STOP
P
C
SHIFT
X
1
+
−
7
8
9
=
4
5
6
,
1
2
3
0
000
·

FIG. 6

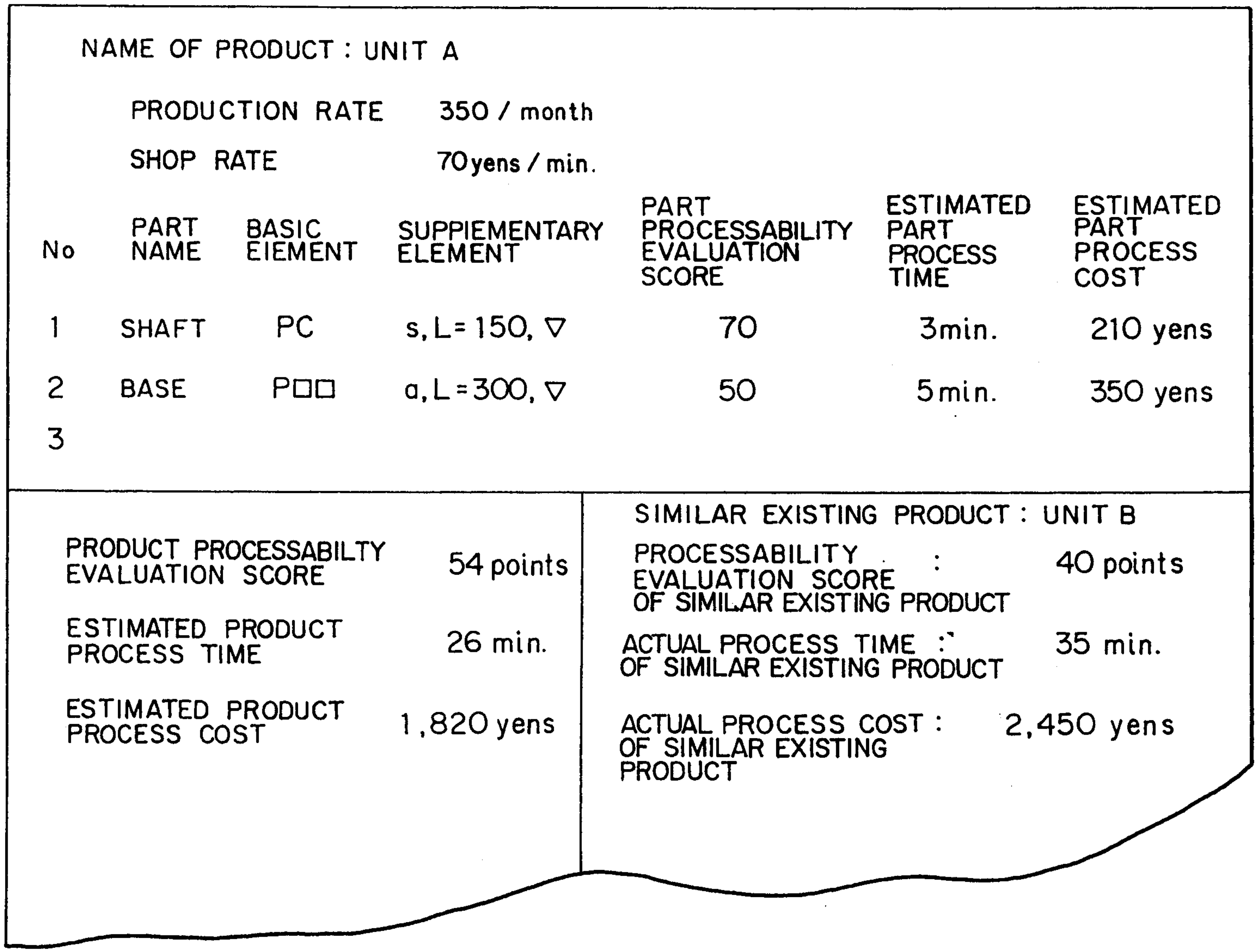
NAME OF PRODUCT : UNIT A
PRODUCTION RATE 350 / month
SHOP RATE 70yens / min.
No
PART NAME
BASIC EIEMENT
SUPPIEMENTARY ELEMENT
PART PROCESSABILITY EVALUATION SCORE
ESTIMATED PART PROCESS TIME
ESTIMATED PART PROCESS COST
1 SHAFT PC s, L= 150, ▽ 70 3min. 210 yens
2 BASE P□□ a, L=300, ▽ 50 5min. 350 yens
3
PRODUCT PROCESSABILTY EVALUATION SCORE 54 points
ESTIMATED PRODUCT PROCESS TIME 26 min.
ESTIMATED PRODUCT PROCESS COST 1,820 yens
SIMILAR EXISTING PRODUCT : UNIT B
PROCESSABILITY EVALUATION SCORE OF SIMILAR EXISTING PRODUCT : 40 points
ACTUAL PROCESS TIME OF SIMILAR EXISTING PRODUCT : 35 min.
ACTUAL PROCESS COST OF SIMILAR EXISTING PRODUCT : 2,450 yens

FIG. 7

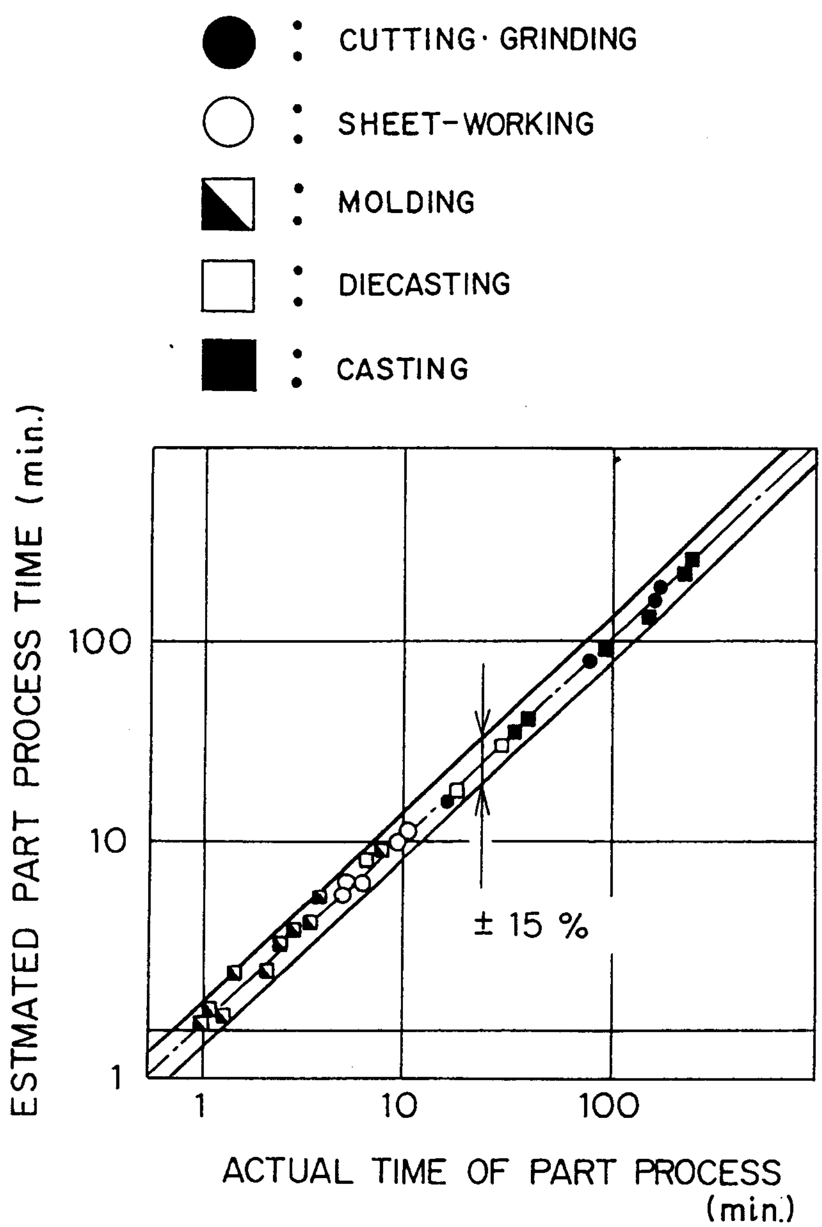
CUTTING · GRINDING
SHEET-WORKING
MOLDING
DIECASTING
CASTING
ESTMATED PART PROCESS TIME (min.)
100
10
1
± 15 %
1
10
100
ACTUAL TIME OF PART PROCESS (min.)

# F I G. 8

( ▽▽ : SURFACES MACHINED)

| ITEM \ EVALUATION INDEX | | PART PROCESSABILITY EVALUATION SCORE | ESTIMATED PART PROCESS COST INDEX |
|---|---|---|---|
| BEFORE IMPROVEMENT | 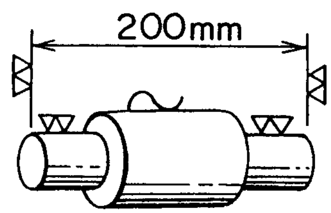  (SUS 6 SURFACES) | 80points | 100 |
| AFTER IMPROVEMENT | 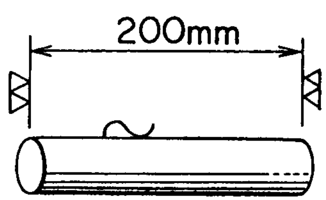  (SUS 2 SURFACES) | 90points | 30 |

# FIG. 9

(Note) $a\varepsilon x = af1(aCx) = af11(aTx) = af12(aIx)$

| BASIC ELEMENTS (aX) | | | BASIC ELIMINATION SCORE (aεx) (Note) | ATTACHING COST (aCx) | ATTACHING TIME (aTx) | ATTACHING COST INDEX (aIx) |
|---|---|---|---|---|---|---|
| NAME | SYMBOL (aX) | CONTENT | | | | |
| ATTACHMENT BY DOWNWARD MOVEMENT | ↓ (aXo) | 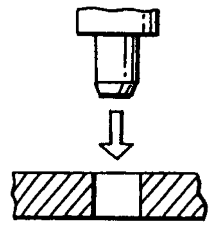 | 0 | yens 1.0 | min. 0. 020 | 100 |
| ATTACHMENT BY HORIZONTAL MOVEMENT | → | 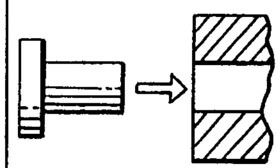 | 5 | 1.3 | 0. 025 | 125 |
| SOLDERING | S | 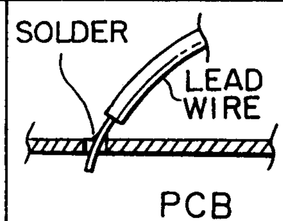 | | | | |
| | | | | | | |

# FIG. 10

(Note) NUMERIC VALUE $\alpha_n = \left( \frac{aCxX_n}{Cx} \right) \times \text{mean}$

| SUPPLEMENTARY ELEMENT (aX) | | | | | SUPPLEMENTARY COEFFICIENT ($a\alpha$) | | ATTACHING COST (aCxXn) | |
|---|---|---|---|---|---|---|---|---|
| NAME | SYMBOL (aX) | IDENTIFICATION | | | | | | |
| | | n | SYMBOL (aXn) | CONTENT | (Note) NUMERIC VALUE | SIMBOL ($a\alpha$) | aX = ↓ | aX = → |
| SIZE | ℓ | | | MAXIMUM DIMENSION<br>MASS<br>OPERATION LENGTH | | λ | | |
| TOLERANCE OF CONFIGURATION / POSTURE | p | | | CONFIG-ULATION<br>OPERATION TOLERANCE | | θ | | |

# FIG. 11

NAME OF PRODUCT : UNIT A

PRODUCTION RATE 350 / month

SHOP RATE 50yens / min.

| No | PART NAME | BASIC ELEMENT | SUPPLEMENTARY ELEMENT | PART ASSEMBLABILITY EVALUATION SCORE | ESTIMATED PART ATTACHING TIME | ESTIMATED PART ATTACHING COST |
|---|---|---|---|---|---|---|
| 1 | BASE | ↓ | L = 300 | 100points | 0.020 min. | 1.0 yens |
| 2 | SHAFT | ↓ → | L = 150 | 76 points | 0.036 min. | 1.8 yens |
| 3 | LEAD WIRE | ↓ S | | 55 points | 0.050 min. | 2.5 yens |

| | |
|---|---|
| PRODUCT ASSEMBLABILITY EVALUATION SCORE | 54 points |
| NUMBER OF PARTS | 80 |
| ESTIMATED PRODUCT ASSEMBLING TIME | 2.6 min. |
| ESTIMATED PRODUCT ASSEMBLING COST | 130 yens |

SIMILAR EXISTING PRODUCT : UNIT B

| | |
|---|---|
| ASSEMBLABILITY SCORE POINT : | 40 points |
| NUMBER OF PARTS OF SIMILAR EXISTING PRODUCT : | 110 |
| ACTUAL ASSEMBLING TIME OF SIMILAR EXISTING PRODUCT : | 3.5 min. |
| ACTUAL ASSEMBLING COST OF SIMILAR EXISTING PRODUCT : | 175 yens |

FIG. 12

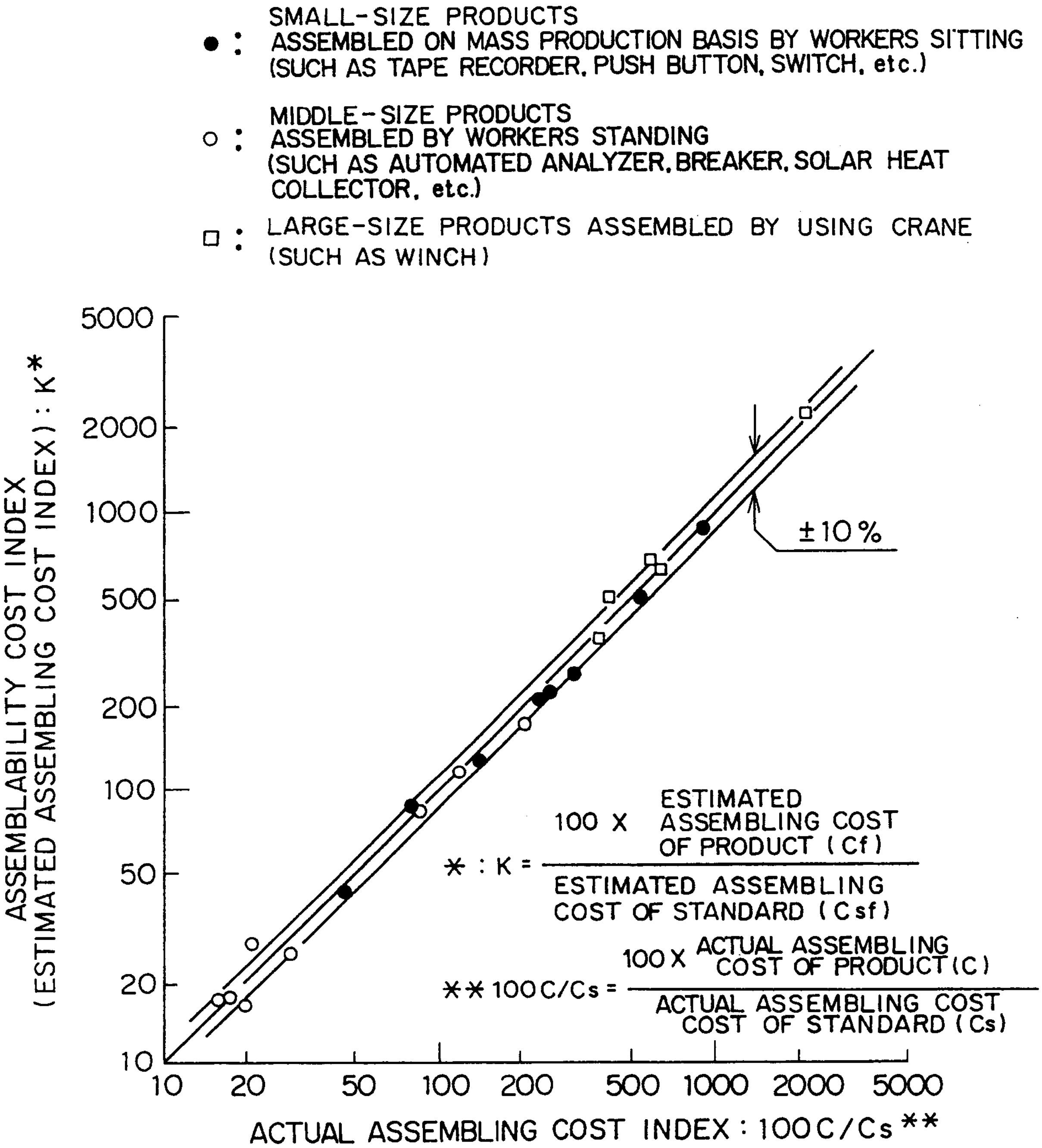
● : SMALL-SIZE PRODUCTS ASSEMBLED ON MASS PRODUCTION BASIS BY WORKERS SITTING (SUCH AS TAPE RECORDER, PUSH BUTTON, SWITCH, etc.)
○ : MIDDLE-SIZE PRODUCTS ASSEMBLED BY WORKERS STANDING (SUCH AS AUTOMATED ANALYZER, BREAKER, SOLAR HEAT COLLECTOR, etc.)
□ : LARGE-SIZE PRODUCTS ASSEMBLED BY USING CRANE (SUCH AS WINCH)
ASSEMBLABILITY COST INDEX (ESTIMATED ASSEMBLING COST INDEX) : K*
5000
2000
1000
500
200
100
50
20
10
±10 %
10
20
50
100
200
500
1000
2000
5000
ACTUAL ASSEMBLING COST INDEX : 100C/Cs**
* : K = 100 X ESTIMATED ASSEMBLING COST OF PRODUCT (Cf) / ESTIMATED ASSEMBLING COST OF STANDARD (Csf)
** 100C/Cs = 100 X ACTUAL ASSEMBLING COST OF PRODUCT (C) / ACTUAL ASSEMBLING COST COST OF STANDARD (Cs)

F I G. 13

| | BEFORE IMPROVEMENT | AFTER IMPOVEMENT |
|---|---|---|
| PARTS TO BE ASSEMBLED | 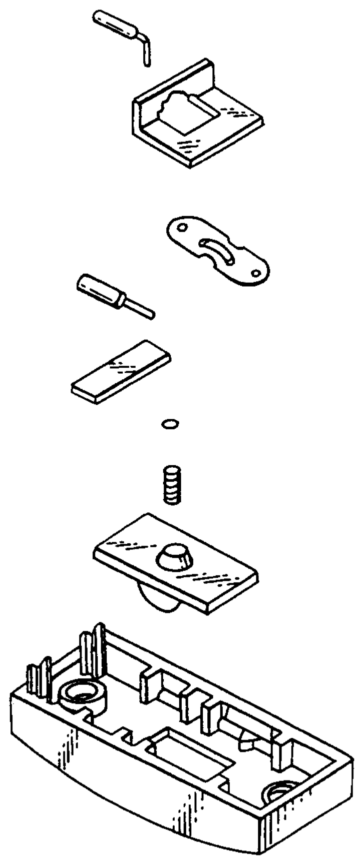 | 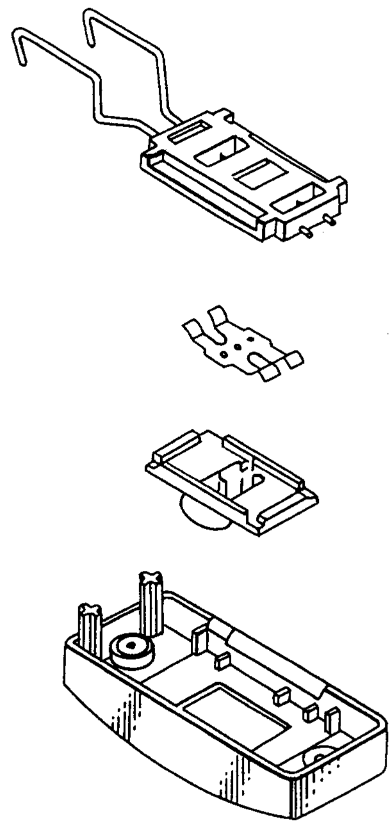 |
| SECTIONAL VIEW | 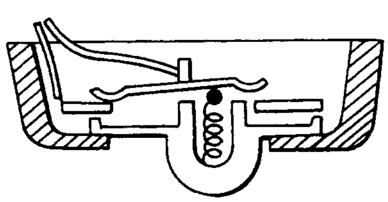 | 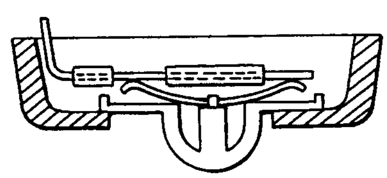 |
| PRODUCT ASSEMBLABI- LITY EVALUA- TION SCORE | 42 | 90 |
| NUMBER OF PARTS | 9 | 4 |
| ASSEMBLABI- LITY COST INDEX | 100 | 25 |

FIG. 14

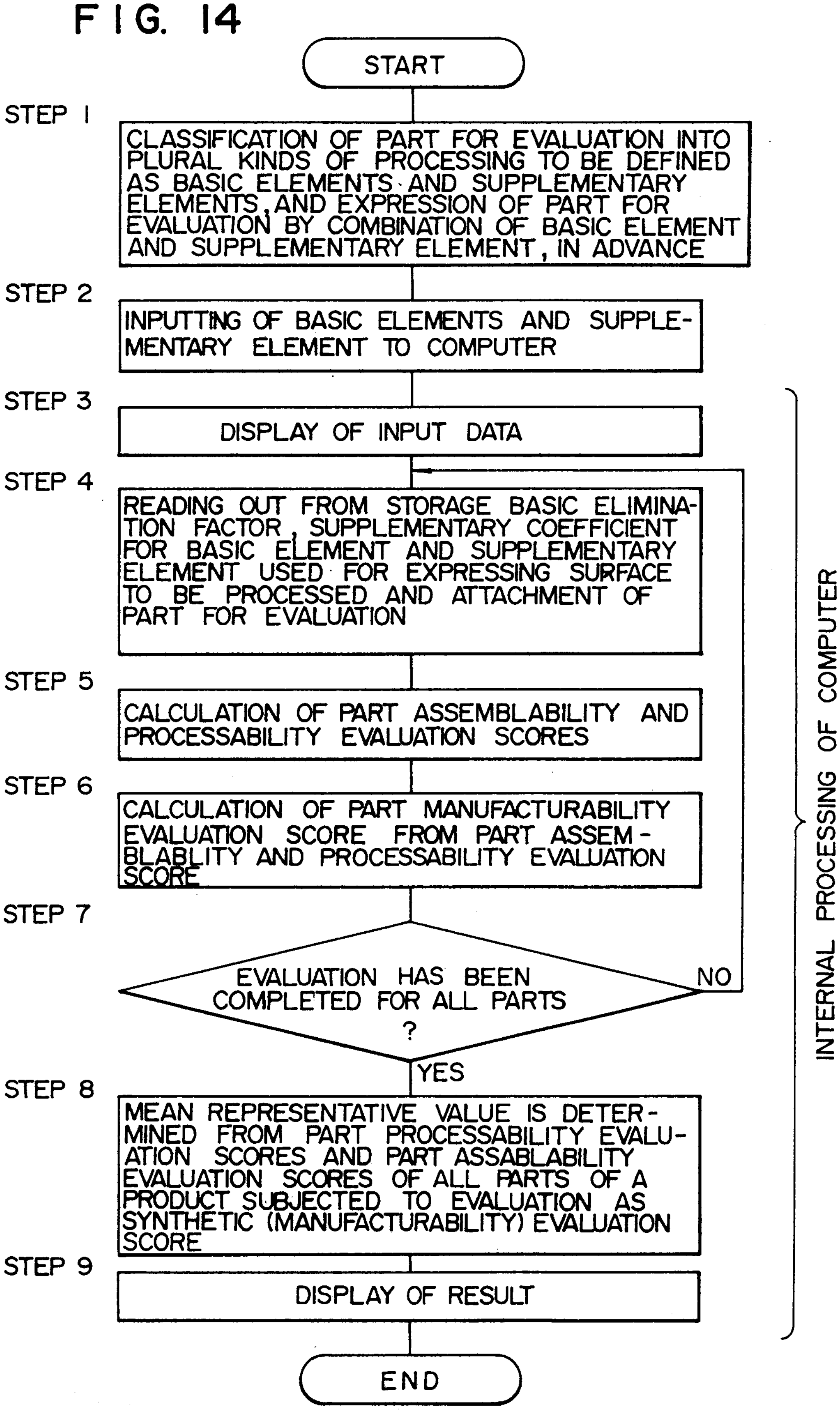
START
STEP 1
CLASSIFICATION OF PART FOR EVALUATION INTO PLURAL KINDS OF PROCESSING TO BE DEFINED AS BASIC ELEMENTS AND SUPPLEMENTARY ELEMENTS, AND EXPRESSION OF PART FOR EVALUATION BY COMBINATION OF BASIC ELEMENT AND SUPPLEMENTARY ELEMENT, IN ADVANCE
STEP 2
INPUTTING OF BASIC ELEMENTS AND SUPPLEMENTARY ELEMENT TO COMPUTER
STEP 3
DISPLAY OF INPUT DATA
STEP 4
READING OUT FROM STORAGE BASIC ELIMINATION FACTOR, SUPPLEMENTARY COEFFICIENT FOR BASIC ELEMENT AND SUPPLEMENTARY ELEMENT USED FOR EXPRESSING SURFACE TO BE PROCESSED AND ATTACHMENT OF PART FOR EVALUATION
STEP 5
CALCULATION OF PART ASSEMBLABILITY AND PROCESSABILITY EVALUATION SCORES
STEP 6
CALCULATION OF PART MANUFACTURABILITY EVALUATION SCORE FROM PART ASSEMBLABLITY AND PROCESSABILITY EVALUATION SCORE
STEP 7
EVALUATION HAS BEEN COMPLETED FOR ALL PARTS ?
NO
YES
STEP 8
MEAN REPRESENTATIVE VALUE IS DETERMINED FROM PART PROCESSABILITY EVALUATION SCORES AND PART ASSABLABILITY EVALUATION SCORES OF ALL PARTS OF A PRODUCT SUBJECTED TO EVALUATION AS SYNTHETIC (MANUFACTURABILITY) EVALUATION SCORE
STEP 9
DISPLAY OF RESULT
END
INTERNAL PROCESSING OF COMPUTER

FIG. 15

| PART NO. | PART NAME | NUMBER | PROCESS-ABILITY EVALUATION SCORE | ESTIMATED PROCESSING COST (¥) | ASSEM-BLABILITY EVALUATION SCORE | ESTIMATED ASSEMBLING COST (¥) | MANUFAC-TURABILITY EVALUATION SCORE | ESTIMATED MANUFAC-TURING COST (¥) |
|---|---|---|---|---|---|---|---|---|
| 1 | CHASI | 1 | 20 | 200 | 100 | 20 | 40 | 220 |
| 2 | GEAR | 1 | 40 | 120 | 80 | 30 | 55 | 150 |
| 3 | MOTOR | 1 | — | 0 | 70 | 40 | 70 | 40 |
| 4 | SCREW | 2 | — | 0 | 60 | 45 | 60 | 45 |
| ⋮ | ⋮ | ⋮ | ⋮ | ⋮ | ⋮ | ⋮ | ⋮ | ⋮ |
| TOTAL | | 20 | 45 | 600 | 75 | 200 | 55 | 800 |

FIG. 16

| | BEFORE IMPROVEMENT | STRUCTURE MODEL A | STRUCTURE MODEL B |
|---|---|---|---|
| PROCESSABILITY EVALUATION SCORE (mE OR mEi) | 50 | 40 | 70 |
| ASSEMBLABILITY EVALUATION SCORE (aE OR aEi) | 50 | 70 | 40 |
| PROCESSABILITY / ASSEMBLABILITY SYNTHETIC EVALUATION SCORE (MANUFAC-TURABILITY EVALUATION SCORE τE OR τEi) | 65 | 70 | 67 |

FIG. 17
PRIOR ART

| | BEFORE IMPROVEMENT | STRUCTURE MODEL A | STRUCTURE MODEL B |
|---|---|---|---|
| PROCESSABILITY EVALUATION SCORE (mE OR mEi) | 50 | 40 | 70 |
| ASSEMBLABILITY EVALUATION SCORE (aE OR aEi) | 50 | 70 | 40 |